# EUROPÄISCHE PATENTSCHRIFT

(11) **EP 2 528 780 B1**
(45) Veröffentlichungstag und Bekanntmachung des Hinweises auf die Patenterteilung: **21.09.2016**
(21) Anmeldenummer: 11708183.6
(22) Anmeldetag: 28.01.2011
(51) Int. Cl.: B60R 7/04, B60R 11/02

(54) **VORRICHTUNG ZUM ANBRINGEN EINES TABLET-COMPUTERS**
APPARATUS FOR MOUNTING A TABLET-COMPUTER
DISPOSITIF POUR LE MONTAGE D'UN TABLET-COMPUTER

(30) Priorität: 12.07.2010 DE 102010026941; 17.06.2010 DE 102010024095; 25.05.2010 DE 102010021372; 10.05.2010 DE 102010020082; 28.01.2010 DE 102010006261
(43) Veröffentlichungstag der Anmeldung: 05.12.2012
(73) Patentinhaber: Kinetix AG, 8750 Glarus (CH)
(72) Erfinder: ACKERET, Peter, CH 8048 Zürich (CH); SKOTT, Jürgen, 72213 Altensteig (DE)
(74) Vertreter: DREISS Patentanwälte PartG mbB
(86) Internationale Anmeldenummer: PCT/EP2011/000393
(87) Internationale Veröffentlichungsnummer: WO 2011/101083

(56) Entgegenhaltungen:
- WO-A2-2004/028861
- DE-U1-202004 018 904
- DE-U1-202005 018 633
- DE-U1-202009 013 607
- US-A- 6 012 693
- US-A1- 2005 174 498
- US-A1- 2006 032 996
- US-B1- 6 464 185

## Beschreibung

Die Erfindung betrifft eine Vorrichtung zum Anbringen eines Tablet-Computers, insbesondere auf der Rückseite eines Fahrzeugsitzteils, wie eine Rückenlehne, Kopfstütze oder Kopfstützenhalterung eines Fahrzeugsitzes.

Im Gegensatz zu einem Notebook-Computer mit Tastenblock und Bildschirmblock, die über ein Gelenk verbunden sind, besteht ein Tablet-Computer aus einem einzigen Block mit integriertem Flachbildschirm, auf dem die Eingaben über automatisch eingeblendete Tastaturen oder mit einem elektronischen Eingabestift erfolgen. Länge und Breite des Blocks entsprechen in etwa den Abmessungen des 9,7 Zoll-Bildschirms und die Dicke liegt bei knapp über 1 cm, so dass Tablet-Computer sehr leichte und portable Geräte sind, die sich besonders gut für unterwegs eignen.

Trotz der sehr kompakten Bauweise vereinen Tablet-Computer eine Vielzahl von passiven und interaktiven Funktionen und können daher sehr vielseitig eingesetzt werden. So kann der Anwender beispielsweise Bücher und Zeitungen lesen, Musik hören, TV-Programme und Videoclips ansehen, GPS-gestützte Karten studieren, im Internet surfen, E-Mails senden und empfangen, via Blogs und Webforen kommunizieren, Computerspiele spielen, sowie Fotos und Dokumente bearbeiten.

Tablet-Computer haben eine eigene Stromquelle und die Datenübertragung erfolgt über Funk, so dass zum Betrieb weder ein Stromanschluss noch ein Anschluss zur Datenübertragung erforderlich sind. Höchstens zum Aufladen der geräteeigenen Batterien oder bei sehr langem Gebrauch muss eine Stromversorgung vorgesehen werden.

Aus all diesen Gründen eignen sich Tablet-Computer auch besonders gut zur Verwendung in Fahrzeugen. Vor allem bei längeren Autofahrten besteht bei Mitfahrern auf den Rücksitzen das Bedürfnis, sich Filme, Informationen und Nachrichten aus dem Internet oder über TV anzuschauen, via E-Mail zu korrespondieren, Musik zu hören oder sich mit Videospielen zu unterhalten. Insbesondere für die passive Benutzung, beispielsweise zum Betrachten von Filmen und Informationssendungen, ist es ideal, wenn der Tablet-Computer auf der Rückseite eines Vordersitzes in etwa auf Höhe der Kopfstütze positioniert und der Bildschirm, respektive Tablet-Computer, in etwa vertikaler Stellung auf die Augenhöhe des Betrachters ausgerichtet ist, Zudem ist es wünschenswert, dass der Bildschirm, respektive der Tablet-Computer, in dieser passiven Gebrauchsstellung sowohl in der Höhe als auch bezüglich Neigungswinkel eine optimierte Feineinstellung auf den jeweiligen Benutzer erlaubt.

Die Gebrauchsstellung des Bildschirms, respektive Tablet-Computers, im passiven Betrachtungsmodus ist jedoch für die interaktive Benutzung, insbesondere für Eingaben auf den eingeblendeten Tastaturen, ungünstig. Vielmehr sollte dazu der Tablet-Computer, mit dem Bildschirm nach oben, in etwa auf Tischhöhe in horizontaler Lage oder vorzugsweise in einer gegen den Benutzer geneigten Schräglage ausgerichtet sein, so dass die Bedienung in einer entspannten Haltung, ohne Verdrehen der Handgelenke und Ermüdung der Arme erfolgen kann.

Auch in dieser interaktiven Gebrauchsstellung ist es wünschenswert, dass der Bildschirm, respektive der Tablet-Computer, sowohl in der Höhe als auch bezüglich Neigungswinkel eine optimierte Feineinstellung auf den jeweiligen Benutzer erlaubt.

Da der meist rechteckige Bildschirm je nach Inhalt hochkant oder quer benützt wird, sollte der Tablet-Computer sowohl in der passiven Gebrauchsstellung, als auch in der interaktiven Gebrauchsstellung zwischen Hoch- und Querformat drehbar sein.

Wichtig ist ferner, dass der Tablet-Computer in den Gebrauchsstellungen stabil fixiert ist, um ein Verstellen durch Erschütterungen, Vibrationen oder Beschleunigungen vom Fahrzeug zu vermeiden.

Wegen ihrer Vielseitigkeit und Personengebundenheit werden Tablet- Computer, ähnlich wie Mobiltelefone, meist nur kurzfristig im Fahrzeug verwendet, so dass sie beim Ein- und Aussteigen mit möglichst geringem Aufwand in die im Fahrzeug angebrachte Vorrichtung ein- und ausgebaut werden können müssen.

Im Weiteren darf die Vorrichtung mit und ohne Tablet-Computer die Sicherheit der Passagiere nicht gefährden oder ihre Bewegungsfreiheit einschränken und sollte bei Nichtgebrauch rasch und einfach am Fahrzeugsitz angebracht oder von diesem entfernt werden können.

Vorteilhaft ist ferner, wenn die Vorrichtung nicht nur in Fahrzeugen, sondern auch anderweitig, zum Beispiel zu Hause oder im Büro verwendet werden kann.

Aus der US 2005/0174498 A1 ist eine Displayvorrichtung bekannt geworden, die in einer Kopfstütze untergebracht ist, wobei die Rückseite eines Displaypanels über eine Ausgleichsplatte mit zwei Gelenken mit einem in der Kopfstütze angeordneten Discplayer bewegbar verbunden ist. Aus der DE 20 2005 018 633 U1 ist eine einstellbare Haltevorrichtung für Bordcomputer bekannt.

Es ist die Aufgabe der Erfindung, eine Vorrichtung zum Anbringen eines Tablet-Computers insbesondere auf der Rückseite eines Fahrzeugsitzes zu schaffen, die eine möglichst vielseitige Nutzung des Tablet-Computers ermöglicht.

Im Weiteren soll der Tablet-Computer in beiden Gebrauchsstellungen bezüglich Höhe und Neigungswinkel individuell auf die Benutzer ausgerichtet und stabil fixiert, sowie zwischen Hoch- und Querformat gedreht werden können.

Der Tablet-Computer soll ferner einfach und schnell in die Vorrichtung eingesetzt und aus dieser entnommen werden können. Ferner soll die Vorrichtung einfach und schnell am Fahrzeugsitz angebracht oder von diesem entfernt und anderweitig, zum Beispiel zu Hause oder im Büro, verwendet werden können.

Schließlich soll die Vorrichtung mit und ohne Tablet-Computer keine Gefährdung für die Passagiere im Fahrzeug darstellen.

Erfindungsgemäß werden diese Aufgaben durch eine Vorrichtung zum Anbringen eines Tablet-Computers auf der Rückseite eines Fahrzeugsitzteils, wie eine Rückenlehne, Kopfstütze oder Kopfstützenhalterung eines Fahrzeugsitzes mit den Merkmalen des unabhängigen Anspruchs 1 gelöst. Vorteilhafte Weiterbildungen der Erfindung sind in den abhängigen Ansprüchen definiert.

Dabei umfasst das Trägerelement einen am ersten Gelenk angeschlossenen Schlitten, der zusammen mit einer an der Rückwand des Halters angeordneten Führungsschiene eine Linearführung bildet, mit welcher der Halter relativ zum ersten Gelenk verschoben werden kann, wobei der Halter in der ersten Gebrauchsstellung im Wesentlichen oberhalb des ersten Gelenks und in der zweiten Gebrauchsstellung im Wesentlichen unterhalb des ersten Gelenks positioniert ist.

In der ersten Gebrauchsstellung ist der Halter vorzugsweise auf Augenhöhe der Betrachter positioniert. Bevorzugt ist ferner die Möglichkeit, den Neigungswinkel des Halters in der ersten Gebrauchsstellung auf den Betrachtungswinkel der Benützer einstellen zu können.

In der zweiten Gebrauchsstellung ist der Halter dabei in einer Schräglage zwischen einer in etwa horizontalen und einer in etwa vertikalen Lage versteilbar. Bevorzugt ist eine Schräglage mit einer Neigung von etwa 30° bis 60° unterhalb der Horizontalen.

Vorteilhafterweise ist der Halter in der ersten Gebrauchsstellung im Wesentlichen oberhalb der Befestigungseinrichtung und in der zweiten Gebrauchsstellung im Wesentlichen unterhalb der Befestigungseinrichtung positioniert.

Bevorzugt ist ferner, dass der Halter auch in Stellungen zwischen der ersten und der zweiten Gebrauchsstellung fixiert und benutzt werden kann.

Die Gelenke und Drehlager werden vorzugsweise durch Reibungs- oder Formschluss in den jeweils eingestellten Positionen gehalten. Bevorzugt sind auch manuell lösbare Rastvorrichtungen, mit einem federbeaufschlagten Sperrriegel, die mit einer Lösetaste entriegelt werden können.

An Stelle von Drehgelenken können auch Kugelgelenke verwendet werden, auch sind Kombinationen von Dreh- und Kugelgelenken möglich.

Vorteilhafterweise ist zwischen der Führungsschiene und dem Schlitten eine Brems- und/oder Rastvorrichtung vorgesehen, mit der der Halter mit dem Tablet-Computer in jeder Position oder nur in vorbestimmten Stellungen durch Reibungs- und/oder Formschluss gehalten wird. Dabei kann eine Feder, insbesondere eine Rollfeder, zur Kompensation der Gewichte von Halter und Tablet-Computer eingesetzt werden. Zum Lösen einer Rastvorrichtung könnte eine Lösetaste an der oberen Stirnseite der Führungsschiene angeordnet werden, die für den Benutzer unabhängig von der Stellung des Halters gut zugänglich ist.

Vorteilhafterweise entspricht die Länge der Führungsschiene in etwa der Länge der längeren Seite des Halters, so dass die Führungsschiene zum platzsparenden Aufbewahren der Vorrichtung den Halter nicht überragt.

Vorteilhafterweise umfasst die Vorrichtung Anschläge, die den Neigungswinkel des Halters gegen den Benutzer mindestens in den beiden Gebrauchsstellungen begrenzen, damit eine Gefährdung der Passagiere bei Unfällen vermieden werden kann.

Vorteilhafterweise ist der Halter in den Gebrauchsstellungen mindestens 90° zwischen Hoch- und Querformat verdrehbar. Besonders vorteilhaft ist, wenn der Halter 360° verdrehbar ist, mit vier Feststellungen von je 90°.

Dazu ist vorzugsweise zwischen der Führungsschiene und dem Halter ein Drehgelenk vorgesehen, dessen Drehachse senkrecht zur Breitseite des Halters verläuft, so dass der vorzugsweise rechteckige Halter zwischen einer Hochformat-Stellung und einer Querformat-Stellung gedreht werden kann. Das Drehgelenk ist vorzugsweise im Schnittpunkt der Diagonalen der Breitseite des Halters angeordnet, so dass der Halter sowohl in der Hochformat-Stellung als auch in der Querformat-Stellung bezüglich des Fahrzeugsitzes bzw. seiner Anbringposition zentriert bleibt.

Bevorzugt sind Rastvorrichtungen, die den Halter in einer Vertikalstellung zum Einsetzen und Entnehmen des Tablet-Computers von oben und in den beiden Horizontalsteilungen, die zusätzlich mit Anschlägen zum Begrenzen der Drehbewegung versehen sein können, fixieren, vorgesehen. Es können aber auch vier Raststellungen vorgesehen werden, so dass der Halter in beiden Vertikal- und Horizontalstellungen fixiert wird,

Der Halter umfasst vorzugsweise eine rechteckige Rückwand, die auf der Rückseite direkt oder indirekt, bspw. über Dreh- oder Kugelgelenke, eine Führungsschiene oder einen Schlitten, mit dem Trägerelement verbunden ist und deren Größe in etwa den Abmessungen des Tablet-Computers entspricht. An den Rändern der Rückwand sind vorzugsweise Abstützungen, z.B. in Form von durchgehenden oder unterbrochenen Stirnwänden, zum seitlichen Festhalten des Tablet-Computers, angeordnet.

Der Halter kann einen parallel zur Rückwand verlaufenden Rahmen aufweisen, der den Bildschirm eines in den Halter eingesetzten Tablet-Computers umschließt. Zum Einsetzen und Entnehmen des Tablet-Computers könnte an einer der Stirnseiten des Halters eine entsprechende Öffnung vorgesehen werden oder der Rahmen kann über ein Scharnier mit dem Halter verbunden sein, so dass er zum Einsetzen oder Entnehmen des Tablet-Computers aufgeklappt werden kann.

Statt eines Rahmens kann in einer bevorzugten Ausführungsform an zwei gegenüberliegenden Abstützwänden auch nur L-förmige Klammern angeordnet sein, die den Tablet-Computer seitlich vom Bildschirm umgreifen und gegen die Rückwand niederhalten, wobei eine der Klammern zum Einsetzen und Entnehmen des Tablet-Computers, vorzugsweise gefedert, nach außen bewegbar sein müsste.

Besonders vorteilhaft ist eine rundum laufende Umrandung, die in etwa der Höhe des Randes des Tablet-Computers entspricht oder diese überragt, Diese Umrandung ist gegen außen vorzugsweise mit einem Sicherheitsradius versehen und kann aus einem elastischen Material bestehen.

Zur Erhöhung der Festigkeit und zum Anbringen großer Sicherheitsradien kann der Rand als doppelwandiges, auf der Seite des Bildschirms geschlossenes U ausgebildet sein.

In einer bevorzugten Ausbildung ist auf einer Seite der Umrandung eine schalenförmige Aufnahmetasche angeordnet in die der Tablet-Computer hineingestellt und anschließend unter die an der gegenüberliegenden Umrandung angeordnete gefederte Halteklammer eingeschwenkt wird.

Weiterhin ist es vorteilhaft, wenn in der Rückwand des Halters Durchbrüche vorgesehen sind, so dass der Tablet-Computer nach Lösen der Halteklammer von hinten aus dem Halter gestoßen werden kann.

In einer bevorzugten Ausführungsform ist eine Federanordnung vorgesehen, die den Tablet-Computer beim Lösen der Halteklammer soweit über die Umrandung anhebt, dass der Tablet-Computer bequem erfasst und aus der Halterung entnommen werden kann.

Bevorzugt ist ferner eine Ausführungsform, bei der in der Rückwand des Halters Ausnehmungen vorgesehen sind, so dass der Tablet-Computer nach Lösen der Halteklammer von hinten aus dem Halter gestoßen werden kann.

Im Halter ist vorzugsweise ein Stecker zur Übertragung von Strom und/oder Daten vorgesehen, der beim Einsetzen des Tablet-Computers mit einem an diesem angeordneten Gegenstecker kuppelt.

Alternativ kann auch nur eine Durchgangsöffnung an entsprechender Stelle der Umrandung des Halters vorgesehen werden, durch welche Stecker für Strom oder Daten direkt mit dem Tablet-Computer gekoppelt werden können. In gleicher Weise könnte an entsprechender Stelle eine Durchgangsöffnung für den Klinkenstecker eines Kopfhörers vorgesehen werden.

Um trotz einer breiten Sicherheits-Umrandung des Halters eine problemlose und bequeme Bedienung der nur wenig über die Stirnseiten des Tablet-Computers hinausragenden Drucktasten zu gewährleisten, können in einer bevorzugten Ausgestaltung der Erfindung in der Umrandung des Halters geführte Übertragungstasten vorgesehen werden, welche den Druck von außen mit einem Stößel auf die am Tablet-Computer angeordnete Tasten übertragen. Die Rückstellung der Übertragungstasten erfolgt vorzugsweise über eine separate Feder, welche an der Taste ausgebildet oder als separates Teil eingesetzt werden kann.

Die Befestigungseinrichtung kann fest oder beweglich mit dem Fahrzeugsitzteil verbunden sein oder nachträglich vom Benutzer des Fahrzeuges an einem Fahrzeugsitzteil angebracht werden.

Die erfindungsgemäße Vorrichtung ist sowohl für den Einbau in einen auf der Rückseite einer Rückenlehne oder einer Kopfstütze angeordneten Aufnahmeraum als auch zum Anbringen an einer entsprechenden Befestigungseinrichtung, welche an einer Rückenlehne, einer Kopfstütze oder einer Kopfstützenhalterung vorgesehenen ist oder angebracht werden kann.

In einer bevorzugten Ausführungsform ist eine Befestigungseinrichtung vorgesehen, mit der die Vorrichtung an den Stangen einer Kopfstütze angebracht werden kann. Die ermöglicht den nachträglichen Einbau in fast jedes Fahrzeug und erfordert keine baulichen Vorkehrungen durch den Fahrzeughersteller.

Vorteilhaft ist es, wenn die Vorrichtung mit einer lösbaren Kupplung mit dem Fahrzeugsitzteil verbunden ist und je nach Bedarf einfach und schnell an diesem befestigt und wieder abgenommen werden kann. Dazu ist es von Vorteil, wenn die Vorrichtung zur Aufbewahrung kompakt zusammengeklappt werden kann.

Gemäß einer bevorzugten Ausführungsform umfasst die Kupplung eine Aufnahmebuchse, in die ein am Trägerelement ausklappbares Steckelement eingesteckt und verriegelt werden kann.

Vorteilhaft ist es ferner, wenn die Vorrichtung möglichst flach am Fahrzeugsitzteil anliegt und die Bewegungsfreiheit der Passagiere möglichst wenig einschränkt oder behindert.

In einer bevorzugten Ausführungsform kann die Vorrichtung in einem auf der Rückseite einer Rückenlehne oder einer Kopfstütze ausgebildeten Aufnahmeraum eingebaut werden, so dass die Vorrichtung in der ersten Gebrauchsstellung im Wesentlichen im Körper des Fahrzeugsitzteils untergebracht ist und der Bildschirm des Tablet-Computers in etwa mit der Außenseite des Fahrzeugsitzteils fluchtet.

Zum Drehen des Halters, bzw. des Tablet-Computers zwischen Hoch und Querformat und/oder zum Einsetzen und Entnehmen des Tablet-Computers sowie zum Bewegen des Halters, bzw. des Tablet-Computers in die zweite Gebrauchsstellung kann die Vorrichtung oder der Halter entsprechend weit aus dem Aufnahmeraum bewegt werden. Dies könnte zum Beispiel über einen Auszug mit Linearführung, einem Drehgelenk oder einer teleskopisch ausziehbaren Drehachse erfolgen.

Für die nachträgliche Montage eignen sich besonders die Kopfstützenstangen mit denen die Kopfstütze mit der Rückenlehne des Fahrzeugsitzes verbunden ist. In einer bevorzugten Ausführungsform kann ein Spannelement zwischen die beiden Kopfstützenstangen eingespannt werden, an dem die Vorrichtung fest oder lösbar angeschlossen wird.

Bevorzugt ist eine Befestigung der Vorrichtung über eine lösbare Kupplung mit einer am Spannelement angeordneten Aufnahmebuchse und einem Steckelement, das in die Aufnahmebuchse eingesteckt und mit einer Verriegelungsvorrichtung verriegelt werden kann. Vorzugsweise ist bei dieser Ausführungsform das erste Gelenk am Steckelement angeordnet.

In einer weiteren bevorzugten Ausführungsvariante umfasst die Vorrichtung eine zweite Befestigungseinrichtung, welche die Verwendung der Vorrichtung auch außerhalb von Fahrzeugen, zum Beispiel zu Hause oder im Büro, ermöglicht Die zweite Befestigungseinrichtung ist vorzugsweise zur Verwendung der Vorrichtung auf einer Tischfläche ausgebildet und umfasst eine identische Aufnahmebuchse für das an der Vorrichtung angeordnete Steckelement, wie die Befestigungseinrichtung im Fahrzeug, so dass die Vorrichtung in gleicher Art und Weise mit den beiden Befestigungseinrichtungen gekuppelt und sowohl im Fahrzeug als auch zu Hause oder im Büro verwendet werden kann.

Eine solche zweite Befestigungseinrichtung ist vorzugsweise mit einem Saughalter mit einem runden Gummiteller versehen, mit dem die Befestigungseinrichtung durch Erzeugen eines Vakuums auf einer Tischfläche oder an einer Wand oder Fensterscheibe befestigt werden kann.

In einer bevorzugten Ausführung umfasst eine solche zweite Befestigungseinrichtung einen runden Sockel, in dem der Saughalter und ein Exzenterhebel zur Erzeugung des Vakuums durch Hochziehen des Gummitellers untergebracht sind, sowie eine drehbar mit dem Sockel verbundene Haube, in der die Aufnahmebuchse untergebracht ist. Dies ermöglicht eine zusätzliche Rotationsbewegung der Vorrichtung von 360° um eine senkrecht zur Befestigungsebene ausgerichtete Drehachse.

In einer weiteren Ausführungsform ist ein Aufsteckfuß aus einem vorzugsweise elastischen Material vorgesehen, der auf das Steckelement der Vorrichtung gesteckt werden kann, so dass die Vorrichtung auch ausserhalb von Fahrzeugen auf ebenen Unterlagen rutschfest aufgestellt werden kann. Der Aufsteckfuß ist vorzugsweise T-förmig ausgebildet und mit seitlichen Abstützungen versehen, so dass die Vorrichtung in Hoch- und Querformat des Halters stabil abgestützt wird.

Weitere Vorteile und Ausgestaltungen der Erfindung ergeben sich aus der Beschreibung und den beiliegenden Zeichnungen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachstehend anhand von bevorzugten Ausführungsbeispielen unter Bezugnahme auf die anliegenden Zeichnungen beschrieben.
Fig. 1 zeigt eine Perspektivansicht einer an einer Kopfstützenhalterung befestigten ersten nicht erfindungsgemäßen Variante der Vorrichtung in der ersten Gebrauchsstellung ohne Tablet-Computer im Querformat.
Fig. 2 zeigt eine Perspektivansicht der Vorrichtung gemäß Fig. 1 beim Einsetzen des Tablet-Computers in den Halter.
Fig. 3 zeigt eine Perspektivansicht der Vorrichtung gemäß Fig. 1 mit in den Halter eingesetztem Tablet-Computer.
Fig. 4 zeigt eine Perspektivansicht der Vorrichtung gemäß Fig. 3 in der zweiten Gebrauchsstellung.
Fig. 5 zeigt eine Perspektivansicht der Vorrichtung gemäß Fig. 3 mit dem Tablet-Computer in der ersten Gebrauchsstellung im Hochformat.
Fig. 6 zeigt eine schematische Seitenansicht der Vorrichtung gemäß Fig. 1 bis 5 in den beiden Gebrauchsstellungen sowie in einer Zwischenstellung.
Fig. 7 zeigt eine schematische Seitenansicht einer zweiten erfindungsgemäßen Variante der Vorrichtung in den beiden Gebrauchsstellungen sowie in einer Zwischenstellung.
Fig. 8 zeigt eine Perspektivansicht der zweiten Variante der Vorrichtung gemäß Fig. 7 mit dem Halter ohne Tablet-Computer im Hochformat von vorne.
Fig. 9 zeigt eine Perspektivansicht der Vorrichtung gemäß Fig. 8 mit separater Baugruppe, bestehend aus Trägerelement mit Führungsschiene und Schlitten mit ausgeklapptem Steckelement, von hinten.
Fig. 10 zeigt eine Perspektivansicht der Vorrichtung gemäß Fig. 9 in zusammengebauten Zustand mit dem Schlitten mit ausgeklapptem Steckelement in der untersten Stellung.
Fig. 11 zeigt eine Perspektivansicht der Vorrichtung gemäß Fig. 10, mit dem Schlitten und ausgeklapptem Steckelement in der obersten Stellung.
Fig. 12 zeigt eine Perspektivansicht der Vorrichtung gemäß Fig. 10 und 11, mit dem Schlittert mit ausgeklapptem Steckelement in Mittelstellung und dem Halter im Querformat.
Fig. 13 zeigt eine Perspektivansicht der Vorrichtung gemäß Fig. 10 mit eingeklapptem Steckelement in der Aufbewahrungssteilung.
Fig. 14 zeigt einen Längsschnitt der Vorrichtung gemäß Fig. 11 mit in den Halter eingesetztem Tablet-Computer.
Fig. 15 zeigt eine teilweise freigeschnittene Detailansicht der Schlittenführung im Trägerelement der Vorrichtung gemäß Fig. 14.
Fig. 16 zeigt eine perspektivische Explosionsansicht der Vorrichtung gemäß Fig. 8 bis 15.
Fig. 17 zeigt eine teilweise geschnittene Seitenansicht einer dritten nicht erfindungsgemäßen Variante der Vorrichtung, in der ersten Gebrauchsstellung.
Fig. 18 zeigt die Vorrichtung gemäß Fig. 17 in einer teilweise geschnittenen Ansicht von hinten in den beiden Gebrauchsstellungen.
Fig. 19 zeigt eine Perspektivansicht der Vorrichtung gemäß Fig. 17 von hinten.
Fig. 20 zeigt eine teilweise geschnittene Seitenansicht einer vierten nicht erfindungsgemäßen Variante der Vorrichtung in der Aufbewahrungsstellung.
Fig. 21 zeigt Vorrichtung gemäß Fig. 20 in der ersten Gebrauchsstellung.
Fig. 22 zeigt die Vorrichtung gemäß Fig. 20 und 21 in der zweiten Gebrauchsstellung.
Fig. 23 zeigt eine Explosionsdarstellung einer modifizierten Ausführungsform der dritten nicht erfindungsgemäßen Variante der Vorrichtung gemäß Fig. 17 bis 19 mit eingesetztem Tablet-Computer.
Fig. 24 zeigt eine Perspektivansicht des Halters der Vorrichtung gemäß Fig. 23 mit eingesetztem Tablet-Computer.
Fig. 25 zeigt einen teilweise freigeschnittenen Querschnitt der Vorrichtung gemäß Fig. 23 und 24 mit eingesetztem Tablet-Computer.
Fig. 26 zeigt einen teilweise freigeschnittenen Längsschnitt der Vorrichtung gemäß Fig. 23 bis 25 mit eingesetztem Tablet-Computer.
Fig. 27 zeigt eine Seitenansicht der Vorrichtung gemäß Fig. 23 bis 26 mit eingesetztem Tablet-Computer und eingeklapptem Steckelement.
Fig. 28 zeigt eine Seitenansicht der an einer Kopfstützenhalterung angebrachten Vorrichtung gemäß Fig. 23 bis 27 mit eingesetztem Tablet-Computer in der ersten Gebrauchsstellung.
Fig. 29 zeigt die Vorrichtung gemäß Fig. 28 in der zweiten Gebrauchsstellung.
Fig. 30 zeigt einen Längsschnitt von vorne einer ersten alternativen Rastvorrichtung des unteren Gelenks der Vorrichtung gemäß Fig. 23 bis 29.
Fig. 31 zeigt einen Längsschnitt von der Seite einer zweiten alternativen Rastvorrichtung des unteren Gelenks der Vorrichtung gemäß Fig. 23 bis 29.
Fig. 32 zeigt einen Längsschnitt von vorne einer modifizierten Ausführungsform der Rastvorrichtung gemäß Fig. 30.
Fig. 33 zeigt einen Längsschnitt von der Seite der Rastvorrichtung gemäß Fig. 32.
Fig. 34 zeigt einen Ausschnitt des Halters mit der Halteklammer gemäß Fig. 24 sowie einer Auswurffeder für den Tablet-Computer.
Fig. 35 zeigt eine alternative Ausbildung des Trägerelements gemäß Fig. 23 bis 29 in einer ersten Stellung.
Fig. 38 zeigt das Trägerelement gemäß Fig. 35 in einer zweiten Stellung.

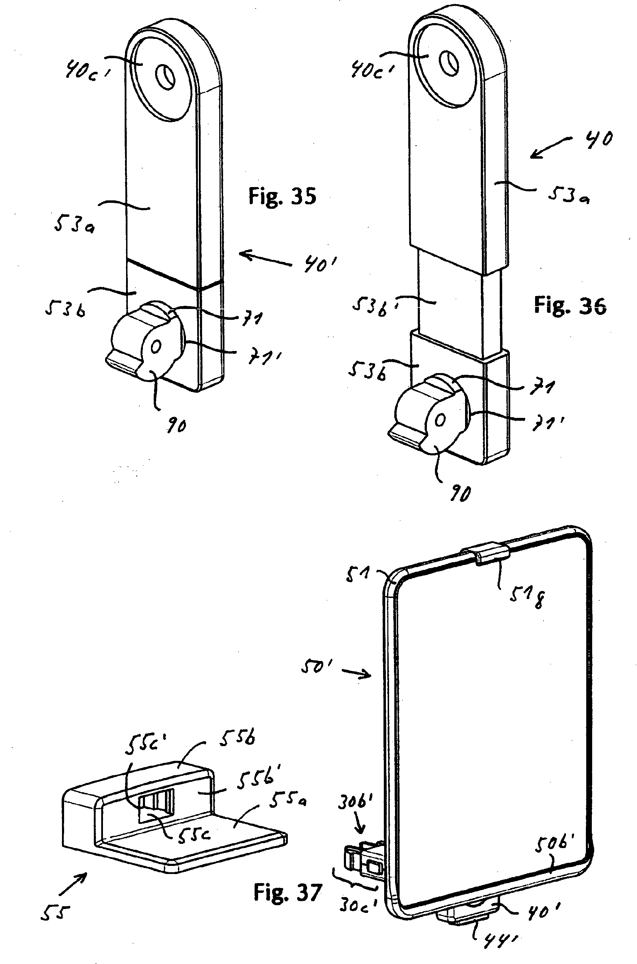

Fig. 37 zeigt eine Perspektivansicht der Vorrichtung mit einer Befestigungseinrichtung zur Verwendung der Vorrichtung außerhalb von Fahrzeugen, in nicht gekuppeltem Zustand.

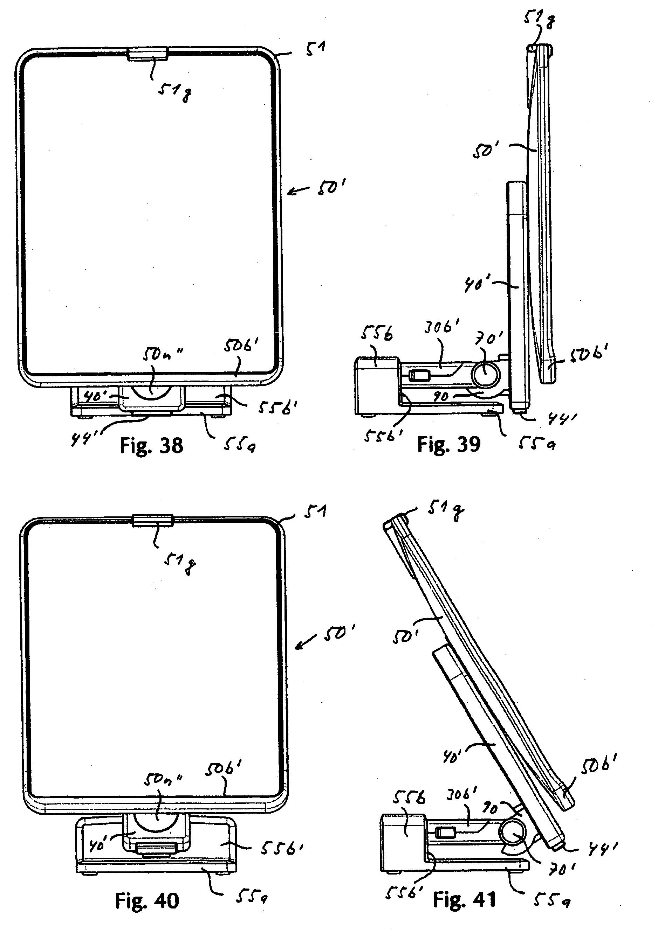

Fig. 38 zeigt eine Frontansicht der Vorrichtung gemäß Fig. 37 im gekuppelten Zustand mit dem Halter in der ersten Gebrauchsstellung.
Fig. 39 zeigt eine Seitenansicht der Vorrichtung gemäß Fig. 38.
Fig. 40 zeigt eine Frontansicht der Vorrichtung gemäß Fig. 38 mit gegen die Befestigungseinrichtung geneigtem Halter.
Fig. 41 zeigt eine Seitenansicht der Vorrichtung gemäß Fig. 40.

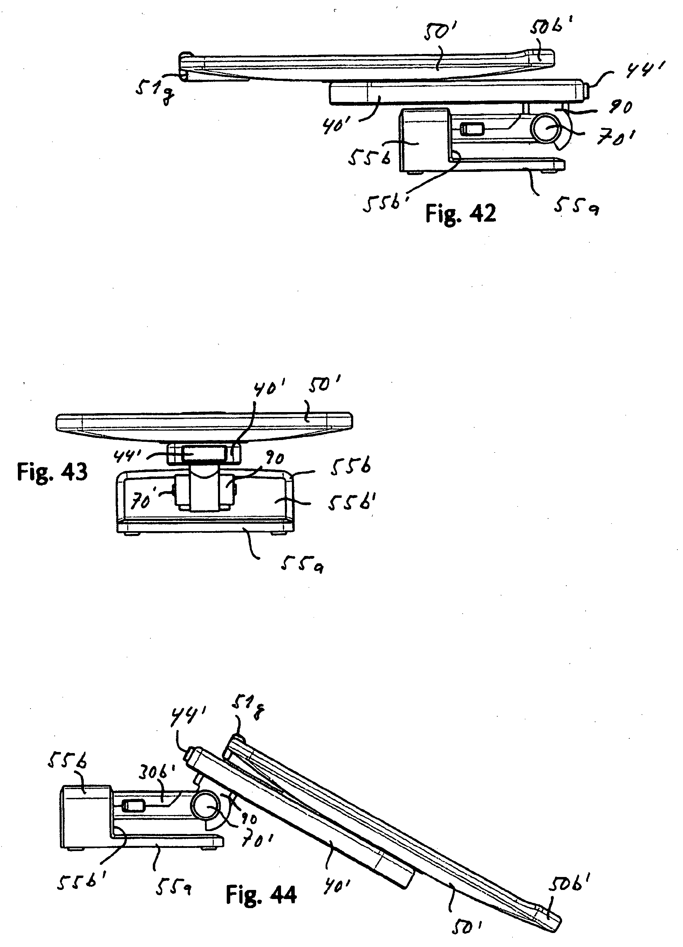

Fig. 42 zeigt eine Seitenansicht der Vorrichtung gemäß Fig. 41 mit auf der Befestigungseinrichtung horizontal aufliegendem Halter.
Fig. 43 zeigt eine Frontansicht der Vorrichtung gemäß Fig. 42.
Fig. 44 zeigt eine Seitenansicht der Vorrichtung gemäß Fig. 38 bis 43 mit dem Halter in der zweiten Gebrauchsstellung.

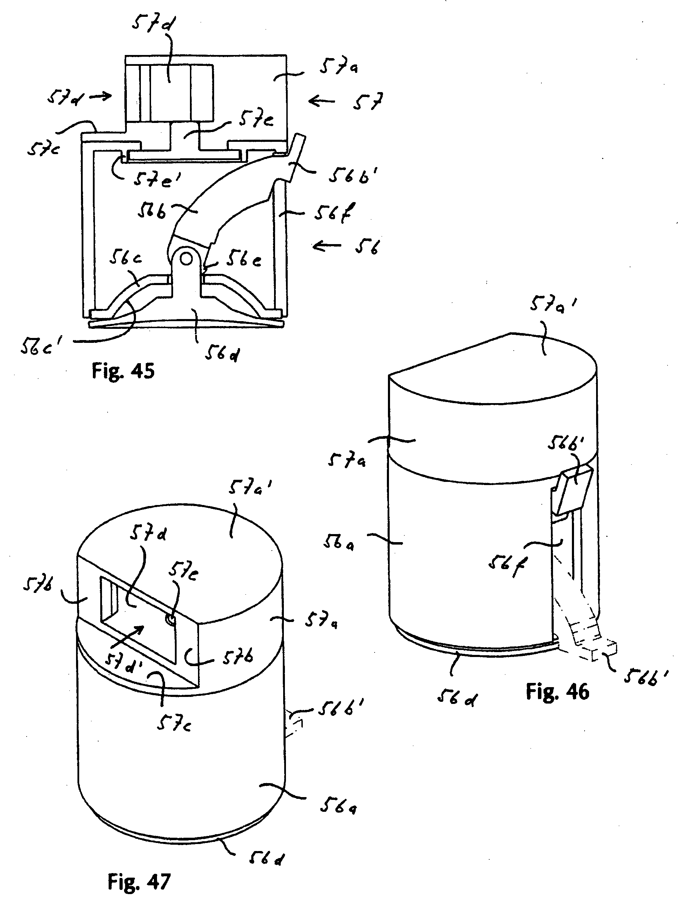

Fig. 45 zeigt einen Längsschnitt einer weiteren Befestigungseinrichtung zur Verwendung der Vorrichtung außerhalb von Fahrzeugen, mit gelöstem Saughalter.
Fig. 46 zeigt eine Perspektivansicht der Befestigungseinrichtung gemäß Fig. 45 schräg von vorne.
Fig.47 zeigt eine Perspektivansicht der Befestigungseinrichtung gemäß Fig. 45 schräg von hinten.

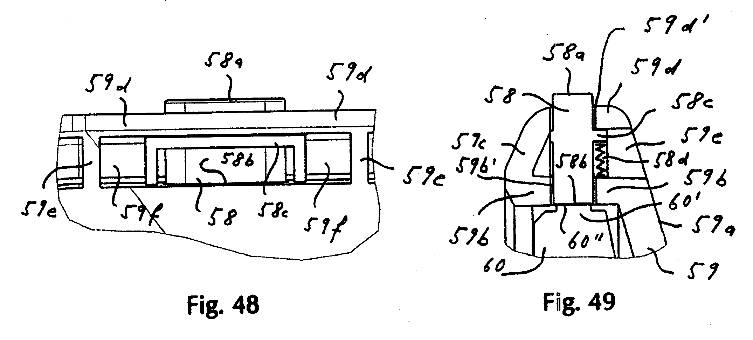

Fig. 48 zeigt einen Ausschnitt der Umrandung des Halters mit einer Übertragungstaste von der Rückseite.
Fig. 49 zeigt einen Querschnitt der Darstellung gemäß Fig. 48 mit einem in den Halter eingesetzten Tablet-Computer.

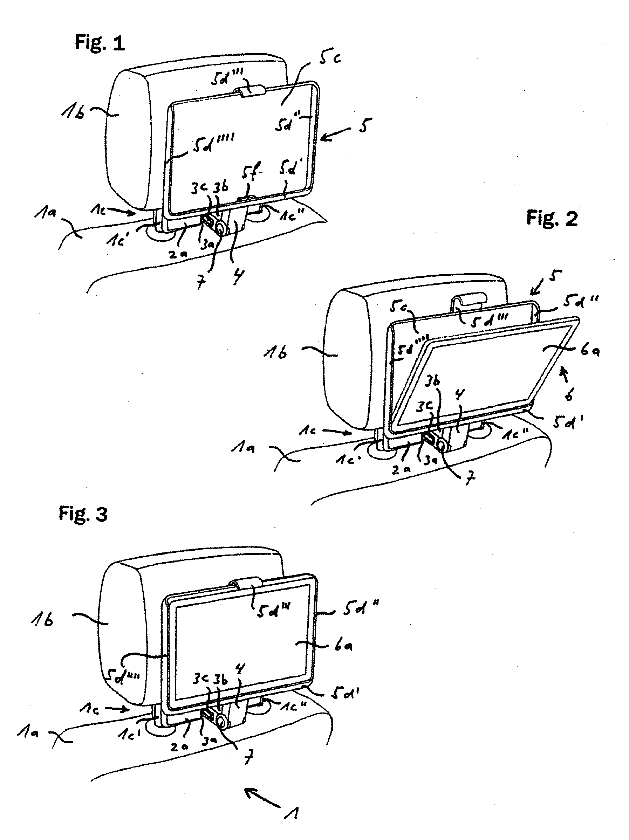

In den Figuren 1 bis 6 wird eine erste nicht erfindungsgemäße Variante der Vorrichtung mit einer ersten Ausführungsform der Überführungsanordnung gezeigt. An der Rückenlehne 1a des Fahrzeugsitzes 1 ist die in der Höhe verstellbare Kopfstütze 1b mit den Kopfstützenstangen 1c', 1c" befestigt. Zwischen den Kopfstützenstangen 1c', 1c" ist ein gefedertes Spannelement 2a eingesetzt, in der Mitte des Spannelements 2a ist eine Aufnahmebuchse 3a angeordnet, in die ein Steckelement 3b eingesteckt und mit einer über seitliche Tasten lösbare Verriegelungsvorrichtung 3c in der Aufnahmebuchse 3a verriegelt.

Am hinteren Ende des Steckelements 3b ist ein erstes Gelenk 7 angeordnet, an dem das eine Ende eines Trägerelements 4 angelenkt ist. Am anderen Ende des Trägerelements 4 ist eine Rückwand 5c eines Halters 5 über ein zweites Gelenk 8 mit dem Trägerelement 4 verbunden. Die Achsen des ersten Gelenks 7 und des zweiten Gelenks 8 verlaufen parallel zur hinteren Breitseite der Rückenlehne 1a bzw. der Kopfstütze 1b.

Zwischen dem zweiten Gelenk 8 und der Rückwand 5c des Halters 5 ist ein Drehgelenk 5a angeordnet, dessen Drehachse 5b senkrecht zur Breitseite der Rückwand 5c verläuft. Das Drehgelenk 5a ist im Schnittpunkt der Diagonalen der Rückwand 5c angeordnet, so dass der Halter 5 zwischen Hochformat und Querformat gedreht werden kann und die mittige Ausrichtung bezüglich des Fahrzeugsitzes 1 beibehält. Ein Lösen der Vorrichtung ist hierzu nicht erforderlich.

Das erste Gelenk 7 und das zweite Gelenk 8 sind als Friktionsscharniere ausgebildet, so dass die jeweiligen Einstellungen des Trägerelement 4 und des Halters 5 beibehalten werden.

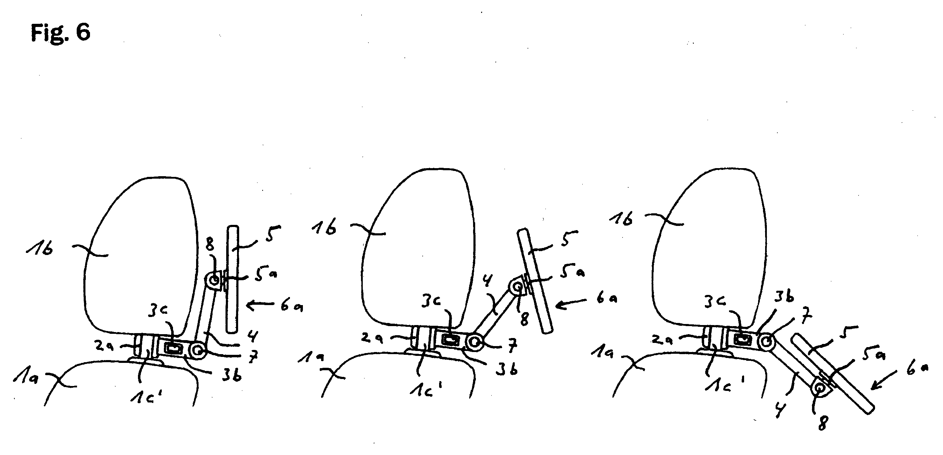

Fig. 6 zeigt in schematischer Darstellung die Vorrichtung in drei verschiedenen Stellungen. Die erste Darstellung zeigt den Halter 5 in der ersten Gebrauchsstellung. Die mittlere Darstellung zeigt eine Zwischenstellung des Halters 5 und die letzte Darstellung zeigt den Halter 5 in der zweiten Gebrauchsstellung.

Fig. 1 zeigt den Aufbau des Halters 5. An den beiden kurzen Stirnkanten der rechteckigen Rückwand 5c sind die Abstützungen 5d" und 5d"" in Form von rechtwinklig angeordneten Seitenwänden angebracht. An der langen unteren Stirnkante (Fig. 1 und 2) ist die Abstützung 5d' als L-förmige Seitenwand ausgebildet und bildet zusammen mit den Abstützungen 5d" und 5d"" eine Tasche, in welche der Tablet-Computer 6 beim Einsetzen in den Halter 5 hineingestellt und dann gegen die Rückwand 5c eingeschwenkt werden kann. Dabei zentrieren die Abstützungen 5d", 5d"" den Tablet-Computer 6 seitlich, so dass beim Einsetzen in den Halter 5 der mittig auf der Innenseite der Abstützung 5d' angeordnete Stecker 5f für Strom- und/oder Datenübertragung mit dem am Tablet-Computer 6 angeordneten Gegenstecker gekuppelt wird.

Auf der der Abstützung 5d' gegenüberliegenden Stirnkante der Rückwand 5c ist die klammerförmige Abstützung 5d"'angeordnet, die mit einer (nicht dargestellten) Feder gegen den Tablet-Computer 6 gedrückt wird und zum Einschwenken des Tablet-Computers 6 über den Rand der Rückwand 5c hinausgezogen werden kann.

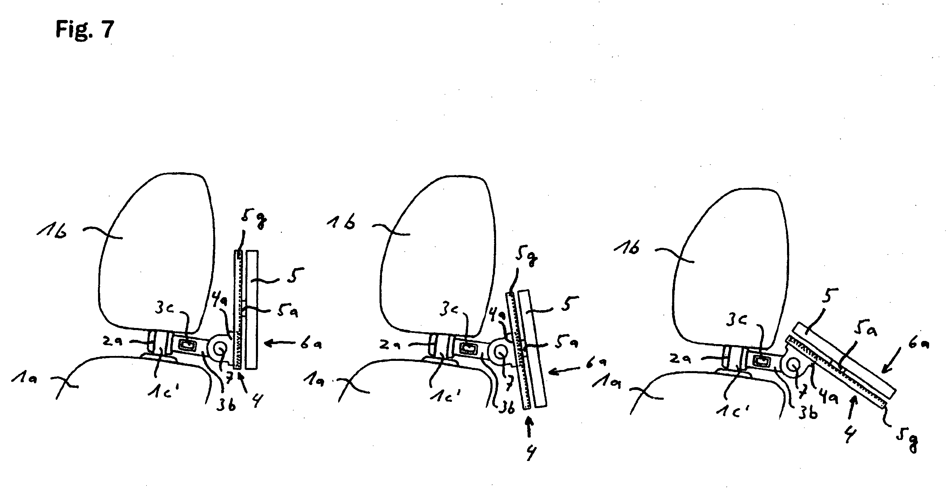

Fig. 7 zeigt die erfindungsgemäße Vorrichtung mit einer zweiten Ausführungsform der Überführungsanordnung, bei der das Trägerelement 4 einen am ersten Gelenk 7 angeschlossenen Schlitten 4a umfasst, der zusammen mit einer am Halter 5 angeordneten Führungsschiene 5g eine Linearführung bildet, mit welcher der Halter 5 relativ zum ersten Gelenk 7 verschoben werden kann. Die erste Darstellung zeigt den Halter 5 in der ersten Gebrauchsstellung. Die mittlere Darstellung zeigt eine Zwischenstellung des Halters 5 und die letzte Darstellung zeigt den Halter 5 in der zweiten Gebrauchsstellung.

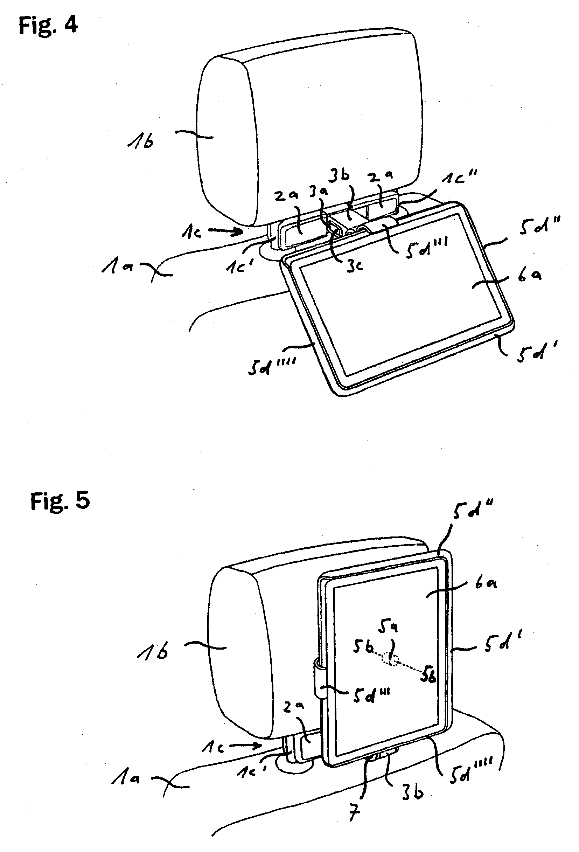

Auch bei dieser zweiten Variante ist das erste Gelenk 7 als Friktionsscharnier ausgebildet, so dass die jeweilige Einstellung des Halters beibehalten wird. Ebenso ist zwischen dem Trägerelement 4 und der Rückwand 5c des Halters 5 ein Drehgelenk 5a angeordnet, dessen Drehachse 5b senkrecht zur Breiseite der Rückwand 5c verläuft (Fig. 5).

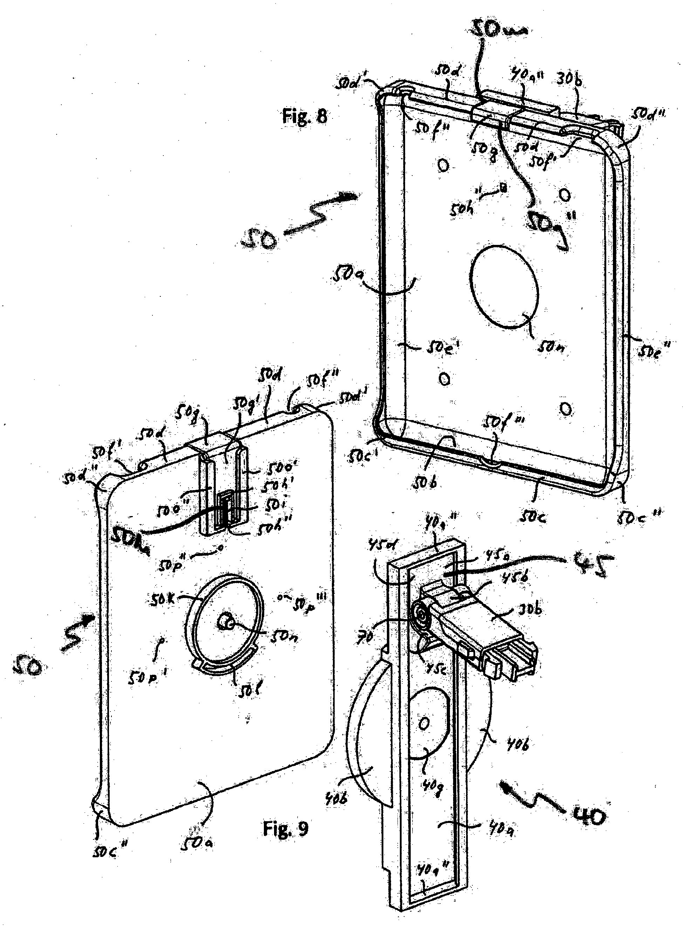

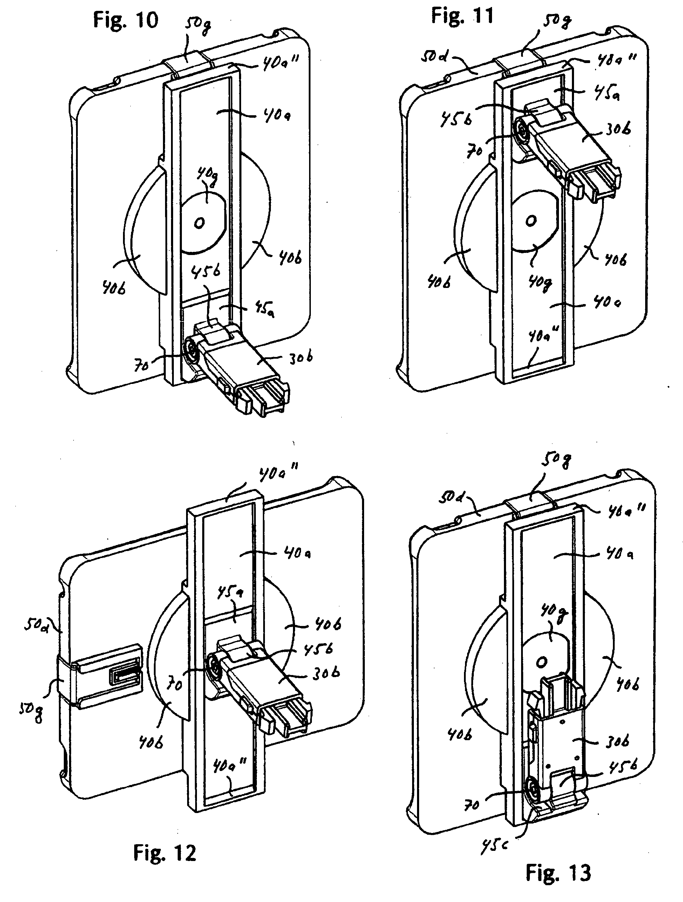

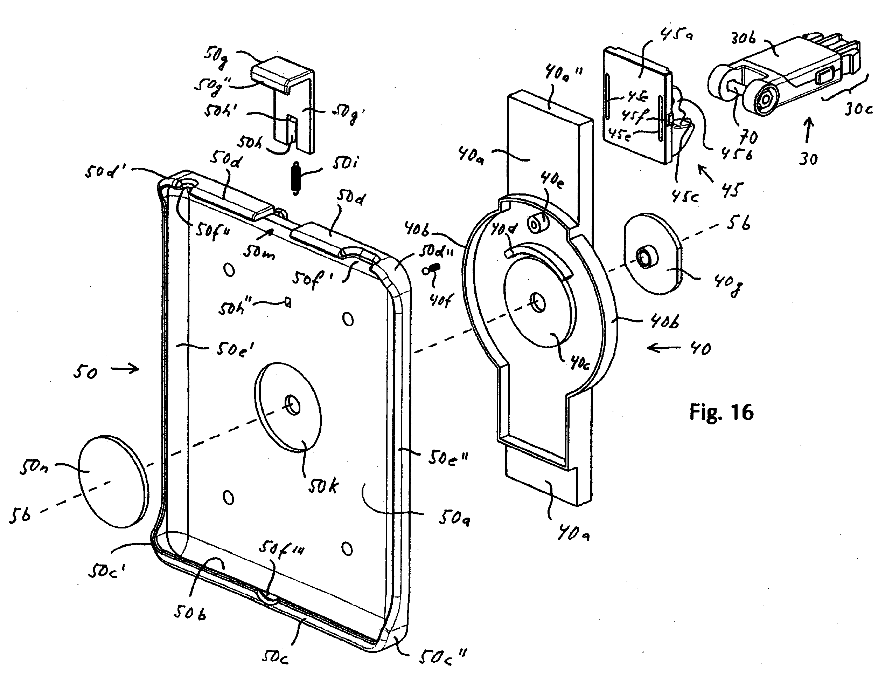

Fig. 8 bis 16 zeigen Detailansichten der erfindungsgemäßen zweiten Variante der Vorrichtung gemäß Fig. 7. Der Schlitten 45 ist mit dem Gelenklager 45b über das Gelenk 70 mit dem Steckelement 30b verbunden. Das Trägerelement 40 umfasst eine Führungsschiene 40a in der die Gleitplatte 45a des Schlitten 45 linear beweglich geführt ist, wobei der Verschiebeweg durch die Endanschläge 40a" begrenzt wird (Fig. 10 und 11).

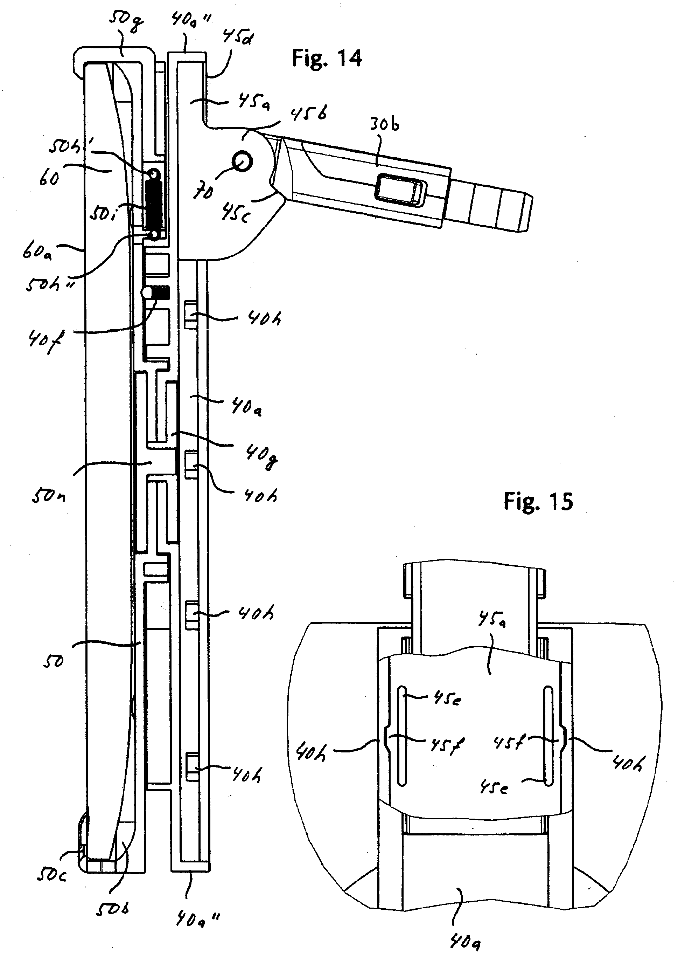

Auf den Innenseiten der beiden Seitenwände der Führungsschiene 40a sind Rastausnehmungen 40h angeordnet, in die seitlich über Federelementen 45e mit der Gleitplatte 45a verbundene Rastnocken 45f eingreifen und den Schlitten 45 mittels Formschluss festhalten. Zwischen den Rastausnehmungen 40h wirken die gefederten Rastnocken 45f mittels Reibungsschluss als Bremsen beim Verschieben des Schlittens (Fig. 14 und 15).

In der Mitte der Führungsschiene 40a ist die erste Lagerschale 40c angeordnet, die zusammen mit der mittig an der Rückwand 50a des Halters 50 angeordneten zweiten Lagerschale 50k das Drehgelenk 5a bildet, das um die Drehachse 5b dreht. Die beiden Lagerschalen 40c, 50k - und damit das Trägerelement 40 und der Halter 50 - werden mit dem Verbindungszapfen 50n der mit der Verbindungshülse 40g verschnappt wird, zusammengehalten. Das Drehgelenk 4Öc, 50k, 40g, 50n wird mit der konzentrisch an der Führungsschiene 40a angebrachten Gelenkabdeckung 40b überdeckt, die die Führungsschiene 40a seitlich überragt und den Halter 50 und das Trägerelement 40 beim Drehen des Halters 50 stabil gegeneinander abstützt. Konzentrisch zur ersten Lagerschale 40c ist ein bogensegmentförmiger Anschlag 40d und konzentrisch zur zweiten Lagerschale 50k ein bogensegmentförmiger Gegenanschlag 501 angeordnet, deren Bogenlängen einem Zentriwinkel von 90° entsprechen und die bei vertikal ausgerichtetem Halter 50 und vertikal ausgerichtetem Trägerelement 40 einander gegenüberliegen, so dass der Halter 50 gegenüber dem Trägerelement 40 aus der vertikalen Stellung auf beide Seiten um je 90° gedreht werden kann.

Vertikal über der Drehachse 5b ist auf der gegen den Halter 50 gerichteten Seite der Führungsschiene 40a eine Aufnahmehülse 40e angeordnet in die eine gefederte Kugelraste 40f eingesetzt ist. An der gegen das Trägerelement 40 gerichteten Seite der Rückwand 50a sind drei Kuhlen 50p', 50p'', 50p"' angebracht, in die die Kugelraste 40f in der vertikalen und den beiden horizontalen Drehstellungen des Halters 50 einrastet und den Halter in den jeweiligen Stellungen fixiert.

Die Länge der Führungsschiene 40a entspricht der Höhe des rechteckigen Halters 50 in seiner vertikalen Stellung im Hochformat. Wird der Halter in die horizontale Stellung ins Querformat geschwenkt, überragt die Führungsschiene 40a den Halter 50 oben und unten symmetrisch (Fig. 12).

Der Schwenkwinkel der Führungsschiene 40a um das erste Gelenks 70 ist durch die beiden Anschläge 45c, 45d am Schlitten 45 begrenzt. Der erste Anschlag 45c dient dazu, die Neigung des Halters 50, bzw. des Tablet-Computers 60 gegen den Benutzer in der ersten Gebrauchsstellung zu begrenzen, während die Neigung des Halters 50 bzw. des Tablet-Computers gegen den Benutzer in der zweiten Gebrauchsstellung durch den zweiten Anschlag 45d an der Gleitplatte 45a begrenzt wird (Fig. 14). In beiden Gebrauchsstellungen kann sich der Halter 50 weg vom Benutzer in Richtung des Fahrzeugsitzteils 10a, 10b frei bewegen.

Zum platzsparenden Aufbewahren kann das Steckelement 30b um das erste Gelenk 70 in die Führungsschiene 40a eingeklappt werden (Fig. 13).

An der Rückwand des Halters 50 sind an den gegenüberliegenden schmalen Stirnseiten obere 50d, 50d', 50d" und untere 50c, 50c', 50c" Abstützungen für den Tablet-Computer 60 angeordnet. Die unteren Abstützungen 50c, 50c', 50c" bilden gemeinsam eine schalenförmige Aufnahme 50b, in die der Tablet-Computer schräg von vorne eingesetzt und dann unter die oberen Abstützungen 50d, 50d', 50d" eingeschwenkt wird.

In der Mitte der oberen Abstützung 50d ist eine Ausnehmung 50m für die L-förmige Halteklammer 50g vorgesehen, die mit dem Führungsschenkel 50g in Klammerführungen 50o', 50o" an der Rückwand 50a geführt und parallel zu dieser verschiebbar ist. In der Mitte des Klammerschenkels 50g' ist ein Durchbruch 50h vorgesehen, in dem eine an den Federaufhängungen 50h', 50h" befestigte Zugfeder 50i untergebracht ist, die die Halteklammer gegen die Stirnseite des in den Halter 50 eingesetzten Tablet-Computer 60 vorspannt.

An der Frontkante der Halteklammer ist eine Einlaufschräge 50g" vorgesehen, so dass die Halteklammer 50g beim Einschwenken des Tablet-Computers nach oben gedrückt wird und anschließend die Frontseite des Tablet-Computers übergreift.

In den Eckbereichen wird der Tablet-Computer durch die Abstützungen 50c', 50c", 50d', 50d" seitlich gehalten. Die Seitenwände 50e, 50e" des Halters haben keine Abstützfunktion und liegen unterhalb der Stirnseiten des Tablet-Computers 60, der seitlich frei zugänglich bleibt.

An den oberen 50d und unteren 50b, 50c Abstützungen sind Ausschnitte 50f, 50f', 50f" vorgesehen, um die Zugänglichkeit zu den Bedienelementen des Tablet-Computers zu gewährleisten.

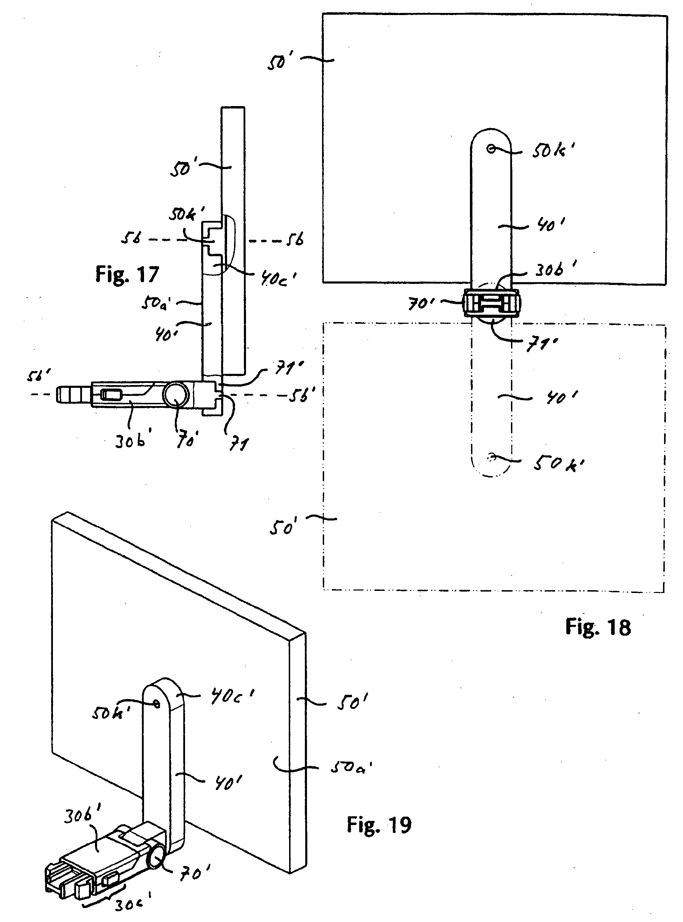

In den Fig. 17 bis 19 wird eine dritte nicht erfindungsgemäße Variante der Vorrichtung mit einer dritten Ausführungsform der Überführungsanordnung gezeigt. Das Trägerelement 40' ist über ein unteres Gelenk 71, 71' mit dem Steckelement 30b' und über ein oberes Gelenk 40c', 50k' mit dem Halter 50' verbunden, wobei die Drehachsen 5b, 5b' der beiden Gelenke 71, 71', 40c', 50k' senkrecht zur Rückwand 50a' des Halters 50' und parallel zueinander verlaufen. Die Bewegung des Halters 50' zwischen der ersten und der zweiten Gebrauchsstellung erfolgt demzufolge in einer Ebene, deren Neigung durch Schwenken des Trägerelements 40' um das erste Gelenk 70' erfolgt.

In der ersten Gebrauchsstellung des Halters 50' steht das Trägerelement 40' mit seiner Längsachse vom unteren Gelenk 71, 71' vertikal nach oben und das obere Gelenk 40c', 50k' liegt senkrecht über dem unteren Gelenk 71, 71' (Fig. 18).

In der zweiten Gebrauchsstellung (gestrichelte Linien) des Halters 50' steht das Trägerelement 40' mit seiner Längsachse vom unteren Gelenk 71, 71' vertikal nach unten und das obere Gelenk 40c', 50k' liegt senkrecht unter dem unteren Gelenk 71, 71' (Fig. 18).

Die erste und die zweite Gebrauchsstellung des Halters 50', bzw. Tablet-Computers 60 sind durch zwei entsprechende Anschläge oder Rastpositionen (nicht dargestellt) am unteren Gelenk 71, 71' und die Drehstellungen des Halters bzw. Tablet-Computers 60 im Hoch- und Querformat durch vier entsprechende Anschläge oder Rastpositionen {nicht dargestellt) am oberen Gelenk 40c', 50k' definiert, während die Einstellung der Neigung des Halters bzw. Tablet-Computers am ersten Gelenk 70' erfolgt.

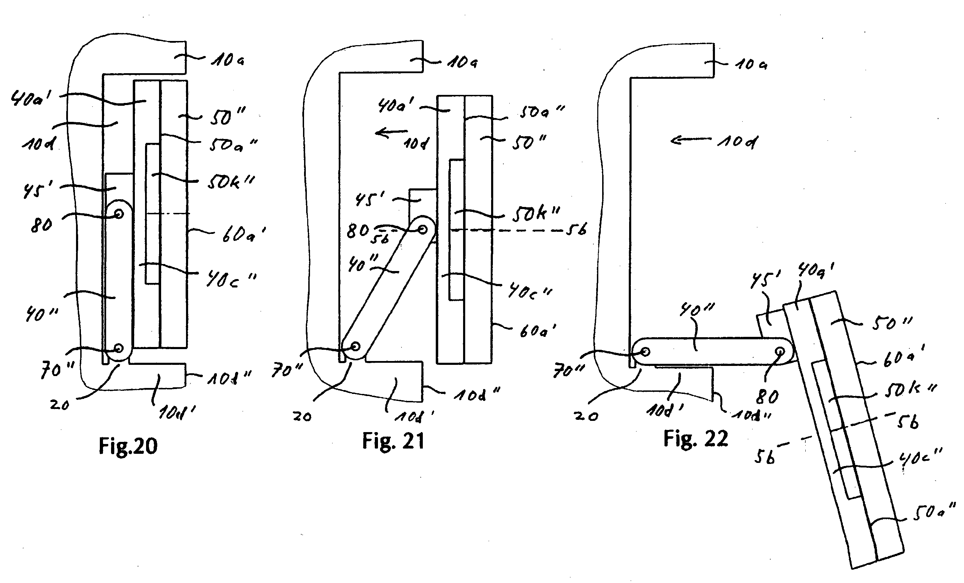

In den Fig. 20 bis 22 wird eine vierte Variante der Vorrichtung mit einer vierten Ausführungsform der Überführungsanordnung gezeigt. In einem Fahrzeugsitzteil 10a ist ein Aufnahmeraum 10d ausgebildet, an dessen Bodenwand 10d' eine Befestigungseinrichtung 20 angeordnet ist, mit der das Trägerelement 40" an seinem unteren Ende über das erste Gelenk 70" verbunden ist. Alternativ kann an dem unteren Ende des Trägerelements 40" auch ein Steckelement gelenkig angeschlossen sein, das in eine entsprechende an der Bodenwand vorgesehene Aufnahme einsetzbar ist.

An seinem oberen Ende ist das Trägerelement 40" über das zweite Gelenk 80 mit dem Schlitten 45' verbunden. Die Drehachsen des ersten und zweiten Gelenks 70", 80 verlaufen horizontal und parallel zur Rückwand 50a" des Halters 50".

Der Schlitten 45' ist längsverschiebbar in der Führungsschiene 40a' geführt, die über das Drehgelenk 40c", 50k" mit dem Halter 50" verbunden ist.

Fig. 20 zeigt die Aufbewahrungsstellung der Vorrichtung, Trägerelement 40", Führungsschiene 40a' und Halter 50" stehen vertikal ausgerichtet hintereinander im Aufnahmeraum 10d, und liegen in zueinander parallelen Ebenen aufeinander. Ist ein Tablet-Computer im Halter 50" eingesetzt, fluchtet sein Bildschirm 60a' in etwa mit der Außenwand 10d" des Fahrzeugsitzteils 10a und kann, allerdings nur in einem Format, benutzt werden.

Fig. 21 zeigt den Halter 50" in der ersten Gebrauchsstellung, in der der Tablet- Computer in den Halter 50" eingesetzt oder aus diesem entnommen und der Halter 50" um die Drehachse 5b zwischen Hoch- und Querformat gedreht werden kann,

Ebenso können durch Bewegen des Halters 50" die Distanz zwischen Bildschirm 60a' und Benutzer durch Änderung des Winkels des Trägerelements 40", die Einstellung der Höhe des Bildschirms 60a' durch Verschieben des Schlittens 45' auf der Führungsschiene 40a' sowie der Neigungswinkel des Bildschirms 60a' durch Schwenken des Schlittens 45' um das zweite Gelenk 80, individuell eingestellt werden.

Fig. 22 zeigt den Halter 50" in der zweiten Gebrauchssteilung. Das Trägerelement 40" liegt horizontal auf der Bodenwand 10d' auf, die einen stabilen Anschlag bildet, und die Führungsschiene 40a' mit dem Halter 50" ist in die unterste Stellung am Schlitten 45' verschoben und gegen den Benutzer geneigt.

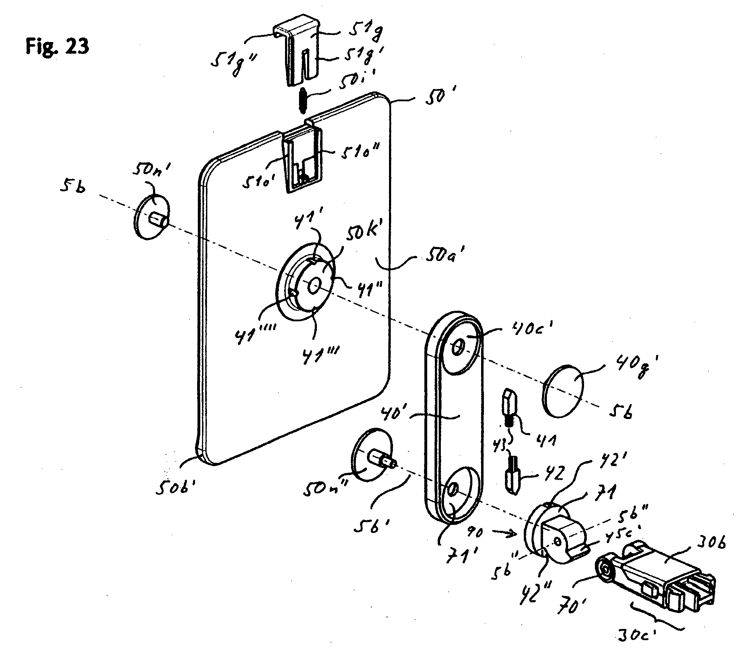

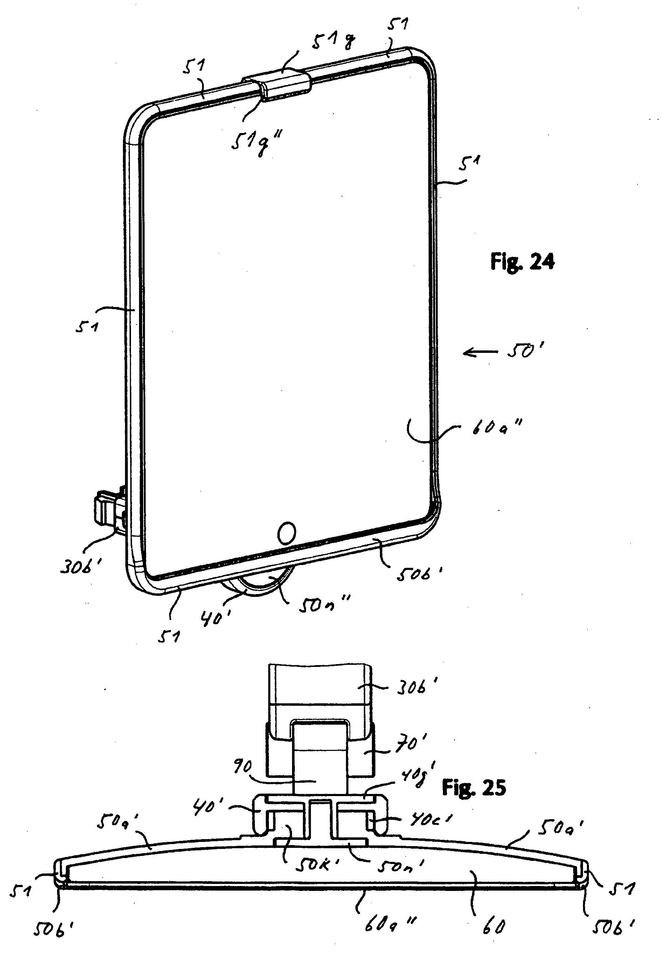

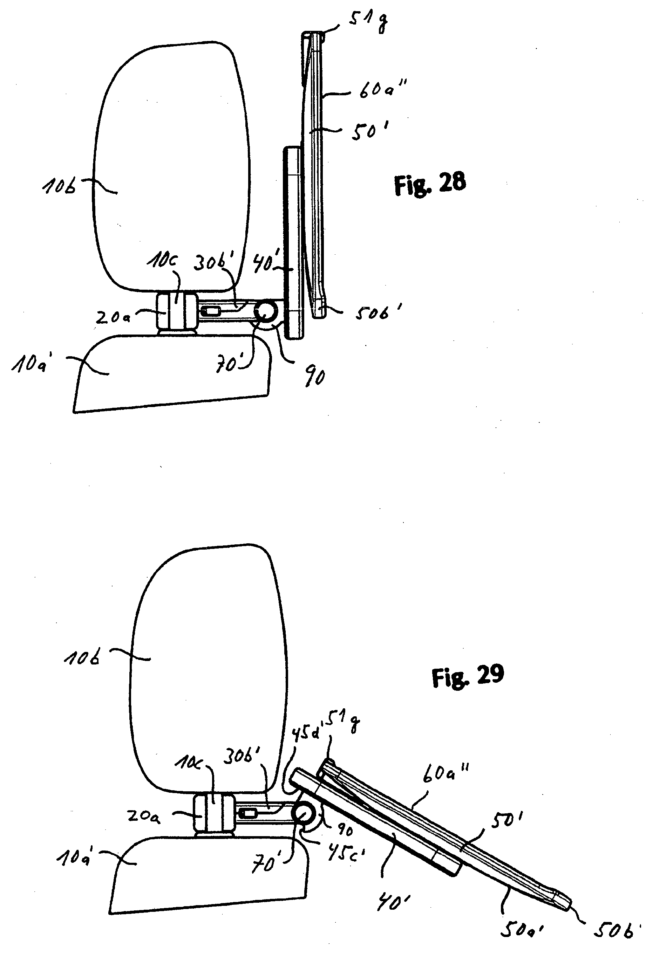

Fig. 23 bis 29 zeigen eine modifizierte nicht erfindungsgemäße Ausführungsform der in den Fig. 17 bis 19 gezeigten dritten nicht erfindungsgemäßen Variante der Vorrichtung mit der dritten Form der Überführungsanordnung.

Ein Zwischenstück 90 ist über das erste Gelenk 70', das um die Drehachse 5b" schwenkt, gelenkig mit dem Steckelement 30b' verbunden. Am Zwischenstück 90 ist der Gelenkkopf 71 angeordnet, dessen Drehachse 5b' rechtwinklig zur Drehachse 5b" verläuft und der zusammen mit der an einem Ende des Trägerelements 40' ausgebildeten Lagerschale 71' das untere Gelenk 71, 71 ' bildet. Der Gelenkkopf 71 und die Lagerschale 71' werden mit dem Verbindungszapfen 50n", der mit dem Zwischenstück 90 verbunden ist, zusammengehalten.

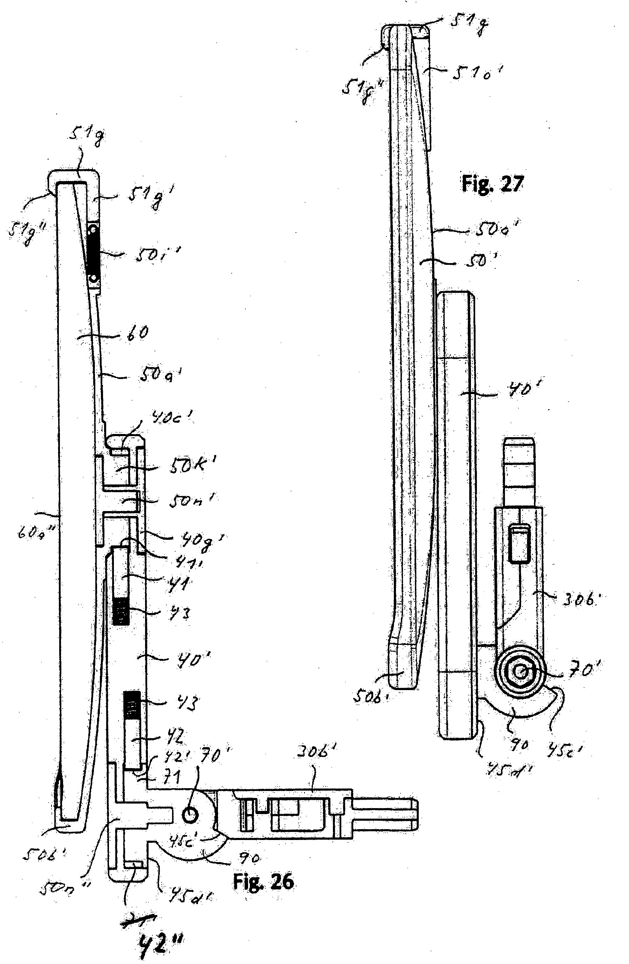

Am anderen Ende des Trägerelements 40' ist die Lagerschale 40c' ausgebildet, die mit dem in der Mitte der Rückwand 50a' des Halters 50' angeordneten Gelenkkopf 50k' das obere Gelenk 40c', 50k' bildet, dessen Drehachse 5b' parallel zur Drehachse 5b' des unteren Gelenks 71, 71' verläuft. Das obere Gelenk 40c', 50k' wird mit dem Verbindungszapfen 50n', der mit der Verbindungshülse 40g' verbunden ist, zusammengehalten. Zwischen dem oberen Gelenk 40c', 50k' und dem unteren Gelenk 71, 71' sind der obere Rastnocken 41 und der untere Rastnocken 42 im Trägerelement 40' linear verschiebbar gelagert (Fig. 26, Fig. 32/33) und mit den Druckfedern 43 radial gegen die Drehachse 5b des oberen Gelenks 40c', 50k', respektive 5b' des unteren Gelenks 71, 71', vorgespannt.

Auf der Außenseite des Gelenkkopfs 50k' sind vier obere Rastausnehmungen 41', 41", 4'", 41"" vorgesehen, in die der obere Rastnocken 41 eingreift und den Halter 50' in den beiden Hochformatstellungen sowie in den beiden Querformatstellungen festhält.

Auf der Außenseite des Gelenkkopfs 71 sind zwei untere Rastausnehmungen 42', 42" gegenüberliegend vorgesehen, in die der untere Rastnocken 42 eingreift und das Trägerelement 40' in den beiden Vertikalstellungen nach unten und nach oben fixiert.

Der Tablet-Computer 60 wird mit der auf einer Schmalseite des Halters 50' angeordneten schalenförmigen Aufnahme 50b' und der auf der gegenüberliegenden Schmalseite des Halters 50' angeordneten, in Klammerführungen 51o', 51o" an der Rückwand 50a' geführten und mit der Zugfeder 50i' gegen den Tablet-Computer 60 vorgespannten Halteklammer 51g, 51g' nach dem bereits erläuterten Prinzip im Halter 50' festgehalten.

Alte vier Stirnseiten des Tablet-Computers werden von einer am Halter angeordneten Umrandung 51 abgedeckt, die auf ihrer Außenseite mit einem Sicherheitsradius versehen und aus einem elastischen Material, wie bspw. einem Silikonkautschuk gefertigt ist.

Am Zwischenstück 90 ist ein erster Anschlag 45c' vorgesehen, der beim Auftreffen auf das Gehäuse des Steckelements 30b' den Neigungswinkel des Halters 50' gegen den Benutzer in der ersten Gebrauchsstellung begrenzt und der Fortsatz des Trägerelements 40' über das untere Gelenk 71 , 71' hinaus bildet einen zweiten Anschlag 45d', der beim Auftreffen auf das Gehäuse des Steckelements 30b' den Neigungswinkel des Halters 50' gegen den Benutzer in der zweiten Gebrauchsstellung begrenzt.

Zum platzsparenden Aufbewahren kann das Steckelement 30b' parallel zum Trägerelement 40' eingeklappt werden (Fig. 27).

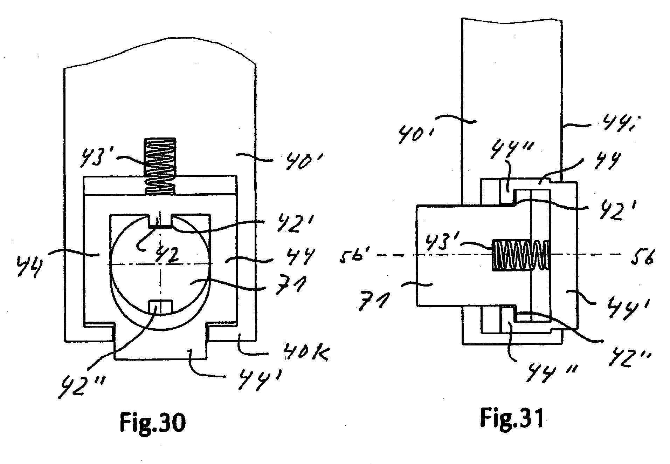

Fig. 30 zeigt eine erste alternative Rastvorrichtung für das untere Gelenk 71, 71'. Der Gelenkkopf 71 wird von einem rahmenförmigen Tastenelement 44 umschlossen, welches im Trägerelement 40' angeordnet und parallel zu dessen Längsachse beweglich ist. Auf der gegen die Stirnseite 40k des Trägerelements 40' gerichteten Seite ist das Tastenelement 44 mit einem Betätigungsorgan 44' versehen, das durch eine entsprechende Öffnung in der Stirnseite 40k nach außen ragt.

An der gegen das obere Gelenk 40c', 50k' gerichteten Seite ist das Tastenelement 44 mit einem radial gegen den Gelenkkopf gerichteten unteren Rastnocken 42 versehen, der mit der Feder 43' in Eingriff mit den an der Außenseite des Gelenkkopfs 71 angeordneten unteren Rastausnehmungen 42', 42" gehalten wird. Durch Druck auf das Betätigungsorgan 44' kann die Rastvorrichtung gelöst und das Trägerelement 40' in die andere Gebrauchsstellung gedreht werden.

Fig. 31 zeigt eine zweite alternative Rastvorrichtung für das untere Gelenk 71, 71'. Konzentrisch zur Drehachse 5b' des unteren Gelenks 71. 71' ist das Tastenelement 44 im Trägerelement 40' gelagert und parallel zur Drehachse 5b' beweglich. Das Tastenelement 44 ist auf der gegen die äußere Breitseite 44i des Trägerelements 40' gerichteten Seite mit einem Betätigungsorgan 44' versehen, das durch eine entsprechende Öffnung in der Breitseite 44i nach außen ragt.

Das Tastenelement 44 umgreift den Gelenkkopf 71 und wird mit der Feder 43' gegen außen gedrückt, wodurch die beiden Rastnocken 44" in Eingriff mit den beiden Rastausnehmungen 42', 42" gehalten werden. Durch Druck auf das Betätigungsorgan 44' kann die Rastvorrichtung gelöst und das Trägerelement 40' in die andere Gebrauchslage gedreht werden.

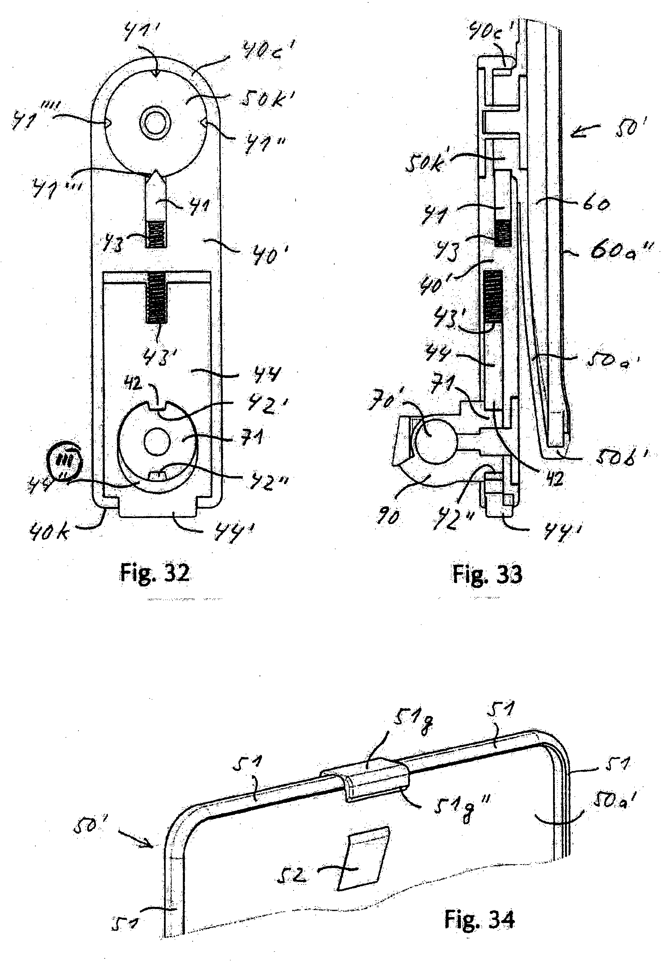

Fig. 32 und 33 zeigen eine modifizierte Ausführungsform der Rastvorrichtung für das untere Gelenk 71, 71' gemäß Fig. 30. Der Gelenkkopf 71 wird von einem rahmenförmigen Tastenelement 44 umschlossen, das sich in etwa über die halbe Lange des Trägerelements 40' erstreckt und in diesem längsverschiebbar geführt ist. Auf der gegen die Stirnseite 40k des Trägerelements 40' gerichteten Seite ist das Tastenelement 44 mit einem Betätigungsorgan 44' versehen, das durch eine entsprechende Öffnung in der Stirnseite 40k des Trägerelements 40' nach außen ragt.

Im Bereich des unteren Gelenks 71, 71' ist im Tastenelement 44 ein an den Durchmesser des Gelenkkopfs 71 angepasstes Langloch 44" ausgebildet, an dessen gegen das obere Gelenk 40c, 50k' gerichteten Seite ein radial gegen den Gelenkkopf 71 gerichteter unterer Rastnocken 42 angeordnet ist, der mit der Feder 43', die das Tastenelement 44 gegen die Stirnseite 40k drückt, in Eingriff mit den an der Außenseite des Gelenkkopfs 71 angeordneten unteren Rastausnehmungen 42', 42" gehalten wird. Durch Druck auf das Betätigungsorgan 44' kann die Rastvorrichtung gelöst und das Trägerelement 40' in die jeweils andere Gebrauchsstellung gedreht werden.

Fig. 34 zeigt einen Ausschnitt des Halters 50' im Bereich der Halteklammer 51g, die parallel zur Rückwand 50a' verschiebbar und mit einer Zugfeder 50i in Richtung gegen das obere Gelenk 40c', 50k' vorgespannt ist (Fig. 26), so dass sie einen in den Halter 50' eingesetzten Tablet-Computer 60 übergreift und im Halter 50' gegen Herausfallen sichert.

Wird die Halteklammer 51g soweit nach außen geschoben, dass sie den Tablet-Computer 60 nicht mehr übergreift, wird dieser durch die an der Rückwand 50a' angebrachte Auswurffeder 52 soweit über die Umrandung 51 hinaus bewegt, dass er bequem erfasst und aus dem Halter 50' entnommen werden kann.

Fig. 35 und 36 zeigen eine alternative Ausbildung des Trägerelements 40', weiches eine erste Trägerschiene 53a und eine zweite Trägerschiene 53b, 53b' umfasst die nach dem Prinzip einer Teleskopschienenführung miteinander verbunden und in Längsrichtung relativ zueinander bewegbar sind. Dadurch kann der Abstand zwischen dem unteren Gelenk 71, 71' und dem oberen Gelenk 40c', 50k', bzw. der Abstand des Halters 50' vom ersten Gelenk 70' in beiden Gebrauchssteilungen variabel an die Bedürfnisse der Benutzer angepasst werden. Zum Fixieren der jeweiligen Einstellungen kann eine manuell lösbare Rastvorrichtung (nicht dargestellt) vorgesehen werden.

Fig. 37 bis 44 zeigen die Vorrichtung mit einer Befestigungseinrichtung zur Verwendung der Vorrichtung außerhalb von Fahrzeugen, die eine rechteckige Bodenplatte 55a zum Aufstellen der Befestigungseinrichtung auf einer ebenen Fläche sowie ein bündig mit drei Kanten der Bodenplatte 55a verlaufendes auf einer Breitseite der Bodenplatte aufgesetztes, quaderförmiges Gehäuse 55b umfasst, in dem mittig die Aufnahmebuchse 55c angeordnet ist, deren Einstecköffnung 55c' mit der inneren Seitenwand 55b' des Gehäuses 55b fluchtet.

Das Steckelement 30b' wird parallel zur Bodenplatte 55a in die Aufnahmebuchse 55c eingeführt und mit der Verriegelungsvorrichtung 30c' in der Aufnahmebuchse 55c verriegelt.

Das Trägerelement 40' kann mit dem Halter 50' um das erste Gelenk 70' um 90° zwischen einer vertikalen und einer horizontale Stellung geneigt und in allen Neigungslagen 360° um das untere Gelenk 71, 71 ' gedreht werden. Ebenso kann der Halter 50' in allen Neigungslagen und Drehstellungen des Trägerelements 40' 360° um das obere Gelenk 40c', 50k' gedreht werden, wie aus den Fig. 38 bis 44 ersichtlich ist.

Fig. 45 bis 47 zeigen eine weitere Variante einer Befestigungseinrichtung zum Anbringen der Vorrichtung auf einer planen Fläche, mit einem als Hohlzylinder ausgebildeten, auf der Unterseite offenen Sockel 56, in dem ein Sauger mit einer glockenförmigen Haube 56c und einem unter der Haube 56c angeordneten Gummiteller 56d sowie einem über der Haube 56c angeordneten Kipphebel 56b mit einem Exzenter 56e zum Einziehen des Gummitellers 56d in die Haube 56c untergebracht ist.

Der Kipphebel 56b ragt durch einen an der Mantelfläche 56a des Sockels 56 angeordneten parallel zur Längsachse des Sockels 56 verlaufenden Schlitz 56f und kann mit einem Betätigungsorgan 56b' von außen zwischen einer oberen Stellung, in welcher der Gummiteller 56d entspannt ist und einer unteren Stellung umgelegt werden, in der der Gummiteller 56d an die Innenseite 56c' der Haube 56c gespannt ist und ein Vakuum erzeugt, das den Gummiteller 56d auf der Befestigungsfläche ansaugt.

Auf der Oberseite des Sockels 56 ist das Oberteil 57 angeordnet, das drehbar mit dem Sockel 56 verbunden ist und in dem die Aufnahmebuchse 57d untergebracht ist.

Das Oberteil 57 hat eine runde Bodenplatte 57c, die mit der Mantelfläche 56a des Sockels 56 fluchtet. Auf der Bodenplatte 57c ist ein Gehäuse mit kreissegmentförmigem Querschnitt angeordnet, mit einem zylindrischen Abschnitt der Mantelfläche 57a und einer geraden Abschlusswand 57b, an der die Einstecköffnung 57d' der Aufnahmebuchse 57d angeordnet ist. Auf der Oberseite ist das Oberteil 57 mit einer flachen Abdeckung 57a' versehen.

Der Sockel 56 und das Oberteil 57 sind mit dem Verbindungselement 57e, das zusammen mit der auf der Oberseite des Sockels 56 angeordneten Lagerschale 57e' das Drehlager bildet, miteinander verbunden. Das Oberteil 57 mit der Aufnahmebuchse 57d kann so auf dem Sockel 58 um 360° gedreht werden.

Fig. 48 und 49 zeigen die Anordnung und Führung der Übertragungstaste 58 in der Umrandung 59b, 59c, 59d des Halters 59, die als U-förmiges, gegen die Rückseite 59a des Halters 59 offenes und gegen außen konisch zulaufendes Profil ausgebildet ist, welches den Tablet-Computer 60 auf seinen Stirnseiten rahmenförmig umschließt.

In der inneren Stirnwand 59b und in der äußeren Stirnwand 59d sind Durchbruche 59b' und 59b' vorgesehen, in denen die Übertragungstaste 58 geführt ist, die mit der Feder 58d nach außen vorgespannt ist.

Zwischen der inneren Stirnwand 59b und der äußeren Stirnwand 59d ist ein gegen die Rückseite 59a offener Hohlraum 59f vorgesehen, in den ein an der Übertragungstaste 58 angeordneter Anschlagbügel 58c ragt, der die Übertragungstaste 58 gegen Herausfallen sichert.

Zur Erhöhung der Stabilität der Umrandung 59b, 59c, 59d des Halters 59 sind auf beiden Seiten der Übertragungstaste 58 Querrippen 59e angeordnet, weiche die innere Stirnwand 59b und die äußere Stirnwand 59d miteinander verbinden.

Bei in den Halter 59 eingesetztem Tablet-Computer 60 liegt die innere Stirnfläche 58b der Übertragungstaste 58 oberhalb der äußeren Stirnseite 60" der Taste 60' des Tablet-Computers 60, die bei einem Druck auf die äußere Stirnfläche 58a der Übertragungstaste 58 aktiviert wird.

Die Erfindung ist vorstehend anhand mehrerer Ausführungsbeispiele von Vorrichtungen beschrieben worden, bei denen der Halter für den Tablet-Computer jeweils mittels einer Überführungsanordnung zumindest zwischen einer ersten Gebrauchsstellung und einer zweiten Gebrauchsstellung verlagerbar ist. Es versteht sich, dass hierneben noch wettere Stellungen, insbesondere solche, in denen die Vorrichtung in einer aufgeräumten Position, beispielsweise in einer Aufbewahrungsposition in einem Gehäuse, gehalten ist, möglich sind.

Die beispielhaft gezeigten Überführungsanordnungen stellen sicher, dass sowohl die Bildschirmseite des Tablet-Computers in den Gebrauchsstellungen jeweils zum Benutzer gerichtet bleibt und zugleich der Tablet-Computer hierbei in dem Halter verbleiben kann. Die Überführungsanordnungen ermöglichen vorteilhaft die Überlagerung von zwei Bewegungen bei der Überführung zwischen den Gebrauchsstellungen. Darüber hinaus kann in jeder der Gebrauchsstellungen der Tablet-Computer gemeinsam mit dem Halter um eine Anlenkachse zwischen Hochformat und Querformat gedreht werden.

In Fig. 20 bis 22 ist beispielhaft eine Ausführung für den Einbau in einen auf der Rückseite einer Rückenlehne oder einer Kopfstütze angeordneten Aufnahmeraum beschrieben, bei dem eine Überführungsanordnung entsprechend Fig. 6 vorgesehen ist. Auszugsmittel zum Herausziehen der Vorrichtung aus dem Aufnahmeraum können vorgesehen sein, um die Vorrichtung ohne Anzustoßen an den Begrenzungen des Aufnahmeraums, wo dies gewünscht ist, vorbeiführen zu können. Die Auszugsmittel können beispielsweise als Gelenk oder als Linearführung ausgestaltet sein, mit denen das gesamte Trägerelement oder zumindest ein dem Halter zugekehrtes Ende des Trägerelements aus dem Aufnahmeraum heraus verlagerbar ist.

## Patentansprüche

1. Vorrichtung zum Anbringen eines Tablet-Computers auf der Rückseite eines Fahrzeugsitzteils, wie eine Rückenlehne (1a), Kopfstütze (1b) oder Kopfstützenhalterung (1c, 1c', 1c") eines Fahrzeugsitzes (1), mit einer Befestigungseinrichtung (2a) zum Anbringen der Vorrichtung am Fahrzeugsitzteil (1a, 1b, 1c, 1c', 1c") und einem mit der Befestigungseinrichtung (2a) beweglich verbundenen Trägerelement (4, 40) mit dem ein Halter (5, 50,150) zur Aufnahme des Tablet-Computers (6, 60) beweglich verbunden ist, wobei
- der Halter (5, 50,150) zwischen einer ersten Gebrauchsstellung, in welcher der Bildschirm (6a, 60a,160a) des Tablet-Computers (6, 60) auf die dem Fahrzeugsitzteil (1a, 1b, 1c, 1c', 1c") abgewandte Seite und in etwa vertikal ausgerichtet ist und einer zweiten Gebrauchsstellung, in welcher der Bildschirm (6a, 60a,160a) des Tablet-Computers (6, 60) in einer Schräglage zwischen einer in etwa horizontalen und einer in etwa vertikalen Lage verstellbar ist, bewegt werden kann,
- das Trägerelement (4, 40) über ein erstes Gelenk (7, 70) mit der Befestigungseinrichtung (2a) verbunden ist,
- das erste Gelenk (7, 70) um eine parallel zur hinteren Breitseite des Fahrzeugsitzteils (1a, 1b, 1c, 1c', 1c"), und horizontal verlaufende Achse (5b") dreht,
**dadurch gekennzeichnet, dass**
das Trägerelement (4, 40) einen am ersten Gelenk (7, 70) angeschlossenen Schlitten (4a, 45, 45a) umfasst, der zusammen mit einer an der Rückwand (5c, 50a) des Halters (5, 50,150) angeordneten Führungsschiene (5g, 40a) eine Linearführung bildet, mit welcher der Halter (5, 50, 150) relativ zum ersten Gelenk (7, 70) verschoben werden kann, wobei der Halter (5, 50,150) in der ersten Gebrauchsstellung im Wesentlichen oberhalb des ersten Gelenks (7, 70) und in der zweiten Gebrauchsstellung im Wesentlichen unterhalb des ersten Gelenks (7, 70) positioniert ist.

2. Vorrichtung nach Anspruch 1, **dadurch gekennzeichnet, dass** zwischen der Führungsschiene (5g, 40a) und dem Halter (5, 50,150) ein Drehgelenk (5a, 40c, 50k) vorgesehen ist, dessen Drehachse (5b) senkrecht zur Breitseite der Rückwand (5c) des Halters (5, 50,150) verläuft, so dass der Halter (5, 50,150) vom Hoch- ins Querformat gedreht werden kann.

3. Vorrichtung nach Anspruch 2, **dadurch gekennzeichnet, dass** Anschläge (40d, 501) oder Rastelemente (40f, 50p', 50p", 50p"') vorgesehen sind, welche den Halter (5, 50, 150) in den Hoch- und Querformatstellungen fixieren.

4. Vorrichtung nach Anspruch 2 oder 3, **dadurch gekennzeichnet, dass** der Halter (5, 50, 150) im Wesentlichen eine rechteckige Form aufweist, wobei im Schnittpunkt der Diagonalen der rechteckigen Rückwand (5c, 50a) des Halters (5, 50) das Drehgelenk (5a, 40c, 50k) vorgesehen ist.

5. Vorrichtung nach Anspruch 2, 3 oder 4, **dadurch gekennzeichnet, dass** das Drehgelenk (5a, 40c, 50k) in der Mitte der Führungsschiene (5g, 40a) angeordnet ist.

6. Vorrichtung nach einem der Ansprüche 1 bis 5, **dadurch gekennzeichnet, dass** die Länge der Führungsschiene (5g, 40a) in etwa der Länge der längeren Seite des rechteckigen Halters (5, 50,150) entspricht.

7. Vorrichtung nach einem der-vorhergehenden Ansprüche, **dadurch gekennzeichnet, dass** das Trägerelement (4, 40) über eine Kupplung (3a, 3b, 30b, 30b',130b) mit manuell lösbarer Verriegelungsvorrichtung (3c, 30c, 30c', 130, 130c') mit der Befestigungseinrichtung (2a) verbunden ist und wobei die Kupplung (3a, 3b, 30b,30b',130b,) eine Aufnahmebuchse (3a) zum Aufnehmen eines Steckelements (3b, 30b, 30b', 130b) umfasst.

8. Vorrichtung nach Anspruch 7, **dadurch gekennzeichnet, dass** die Aufnahmebuchse (3a) an der Befestigungseinrichtung (2a) angeordnet ist und das Steckelement (3b, 30b, 30b', 130b) mit dem Gelenklager (45b) über das erste Gelenk (7, 70) mit dem Schlitten (4a, 45, 45a) verbunden ist.

9. Vorrichtung nach einem der vorhergehenden Ansprüche, **dadurch gekennzeichnet, dass** das erste Gelenk (7, 70, 170) mit einer formschlüssigen Rastvorrichtung (190a, 190a', 190a", 190b, 190b', 190d) versehen ist, die mit einem stirnseitig angeordneten Druckknopf (190c) lösbar ist.

10. Vorrichtung nach einem der vorhergehenden Ansprüche, **dadurch gekennzeichnet, dass** der Halter (5, 50, 150) auch in Stellungen zwischen der ersten und der zweiten Gebrauchsstellung fixiert und benutzt werden kann.

11. Vorrichtung nach einem der vorhergehenden Ansprüche, **dadurch gekennzeichnet, dass** Anschläge (45c, 45d) vorgesehen sind, die den Schwenkwinkel der Führungsschiene (5g, 40a) um das erste Gelenk 7, 70) und damit die Neigungswinkel des Halters (5, 50, 150) gegen den Benutzer mindestens in der ersten und zweiten Gebrauchsstellungen begrenzen.

12. Vorrichtung nach einem der vorhergehenden Ansprüche, **dadurch gekennzeichnet, dass** zwischen der Führungsschiene (5g, 40a) und dem Schlitten (4a, 45, 45a) eine Brems- und oder Rastvorrichtung (40h, 45e, 45f) vorgesehen ist, mit der der Halter (5, 50, 150) mit dem Tablet-Computer (6, 60) in jeder Position oder in vorbestimmten Stellungen durch Reibungs- und/oder Formschluss gehalten wird.

13. Vorrichtung nach Anspruch 12, **dadurch gekennzeichnet, dass** eine, vorzugsweise an einer Stirnseite (40a") der Führungsschiene (5g, 40a) angeordnete Lösetaste zum Lösen der Rastvorrichtung (40h, 45e, 45f) vorgesehen ist.

14. Vorrichtung nach einem der vorhergehenden Ansprüche, **dadurch gekennzeichnet, dass** zwei an gegenüberliegenden Stirnseiten angeordnete Abstützungen (5d', 5d"', 50b, 50g) klammerförmig ausgebildet sind, so dass sie den in den Halter (5, 50) eingesetzten Tablet-Computer (6, 60) übergreifen wobei mindestens eine der beiden klammerförmig ausgebildeten Abstützungen (5d"', 50g) gefedert ist und zum Einsetzen oder Entnehmen des Tablet-Computers (6, 60) über die Rückwand (5c, 50a) hinaus nach aussen bewegt werden kann.

15. Vorrichtung nach Anspruch 14, **dadurch gekennzeichnet, dass** eine am Halter (5, 50, 59, 150) rundum laufende Umrandung (59b, 59c, 59d) in etwa der Höhe des Randes des Tablet-Computers (6, 60) entspricht oder diese überragt, und gegen aussen mit einem Sicherheitsradius versehen ist und wobei zur Erhöhung der Festigkeit und zum Anbringen grosser Sicherheitsradien, der Rand (59b, 59c, 59d) des Halters (5, 50, 150) als doppelwandiges, auf der Seite des Bildschirms (6a, 60a) geschlossenes U ausgebildet ist.

## Claims

1. Device for attaching a tablet computer to the rear side of a motor vehicle seat part such as a back rest (1a), head rest (1b) or head rest mounting (1c, 1c', 1c") of a vehicle seat (1), with
a fastening device (2a) for mounting the device to the vehicle seat part (1a, 1b, 1c, 1c', 1c") and
a carrier element (4, 40) which is movably connected to the fastening device (2a), and to which a holder (5, 50, 150) is movably connected for receiving the tablet computer (6, 60), wherein
- the holder (5, 50, 150) can be moved between a first position of use, in which the screen (6a, 60a, 160a) of the tablet computer (6, 60) is oriented in an approximately vertical direction facing away from the vehicle seat part (1a, 1b, 1c, 1c', 1c"), and a second position of use, in which the screen (6a, 60a, 160a) of the tablet computer (6, 60) is adjustable in an inclination between a substantially horizontal and a substantially vertical position,
- the carrier element (4, 40) is connected to the fastening device (2a) via a first joint (7; 70),
- the first joint (7; 170) rotates about an axis (5b") that extends in a horizontal direction and parallel to the rear broad side of the vehicle seat part (1a, 1b, 1c, 1c', 1c"), **characterized in that**
the carrier element (4, 40) comprises a slide (4a, 45, 45a) connected to the first joint (7, 70), which cooperates with a guide rail (5g, 40a) disposed on a real wall (5c, 50a) of said holder (5, 50, 150) to constitute a linear guide with which the holder (50, 50, 150) is displaceable relative to the first joint (7, 70), wherein the holder (5, 50, 150) is positioned substantially above said first joint (7, 70) in the first position of use and substantially below the first joint (7, 70) in the second position of use.

2. Device according to claim 1, **characterized in that** a pivot joint (5a, 40c, 50k) is provided between the guide rail (5g, 40a) and the holder (5, 50, 150), the axis of rotation (5b) of which extends perpendicularly with respect to the broad side of the real wall (5c) of the holder (5, 50, 150) such that the holder (5, 50, 150) can be rotated from an upright format to a transverse format.

3. Device according to claim 2, **characterized in that** stops (40d, 501) or fixing elements (40f, 50p', 50p", 50p'") are provided which fix the holder (5, 50, 150) in the upright format or transverse format position.

4. Device according to claim 2 or 3, **characterized in that** the holder (5, 50, 150) has a substantially rectangular shape wherein the pivot joint (5a, 40c, 50k) is provided in the point of intersection of the diagonal of the rectangle on a rear wall (5c, 50a) of the holder (5, 50, 150).

5. Device according to claim 2, 3 or 4, **characterized in that** the pivot joint (5a, 40c, 50k) is arranged in the middle of the guide rail (5g, 40a).

6. Device according to one of the claims 1 through 5, **characterized in that** length of the guide rail (5g, 40a) corresponds to approximately the length of the longer side of the rectangular holder (5, 50, 150).

7. Device according to any one of the preceding claims, **characterized in that** the carrier element (4, 40) is connected to the fastening device (2a) via a coupling (3a, 3b, 30b, 30b', 130b) with manually releasable locking device (3c, 30c, 30c', 130, 130c'), wherein the coupling (3a, 3b, 30b, 30b', 130b) comprises a locating bushing (3a) for receiving a connector element (3b, 30b, 30b', 130b).

8. Device according to claim 7, **characterized in that** the locating bushing (3a) is arranged on the clamping element (2a) and the connector element (3b, 30b, 30b', 130b) is connected via the joint bearing (45b) to the slide (4a, 45, 45a) via the first joint (7, 70).

9. Device according to any one of the preceding claims, **characterized in that** the first joint (7, 70, 170) comprises a positive-locking locking device (190a, 190a', 190a", 190b', 190d) which is releasable via a push button arranged on the front side.

10. Device according to any one of the preceding claims, **characterized in that** the holder (5, 50, 150) can also be fixed and used in positions between the first and the second position of use.

11. Device according to any one of the preceding claims, **characterized in that** stops (45c, 45d) are provided that restrict the pivot angle of the guide rail (5g, 45a) around the first joint (7, 70) and thereby limit the angles of inclination of the holder (5, 50, 150) towards the user at least in the first and second position of use.

12. Device according to any one of the preceding claims, **characterized in that** a breaking or locking device (40h, 45e, 45f) is provided between the guide rail (5g, 40a) and the slide (4a, 45, 45a) with which the holder (5, 50, 150) with the tablet computer (6, 60) can be held in every position or in predetermined positions via frictional connection and/or via form fit.

13. Device according to claim 12, **characterized in that** a release button for releasing the locking device (40h, 45e, 45f) is provided that is arranged preferably on the front side (40a") of the guide rail (5g, 40a) the carrier element (40"; 140) can be rotated about the third joint (71, 71').

14. Device according to any one of the preceding claims, **characterized in that** supports (5d', 5d"', 50b, 50g) arranged on two opposite end faces are designed as clamps such that they extend over the tablet computer (6, 60) that is inserted into the holder (5, 50), wherein at least one of the two clamp-shaped supports (5d"', 50g) is spring-loaded and can be moved past the rear wall (5c, 50a) to the outside for inserting or removing the tablet computer (6, 60).

15. Device according to claim 14, **characterized in that** a continuous border (59b, 59c, 59d) of the holder (5, 50, 59, 150) approximately corresponds to or slightly projects past the height of the edge of the tablet computer (6, 60) and has a safety radius to the outside and wherein the edge (59b, 59c, 59d) of the holder (5, 50, 59, 150) is designed as a double-walled U that is closed on the side of the screen (6a, 60a) for increasing the stability and for providing large safety radii.

## Revendications

1. Dispositif de montage d'une tablette tactile sur la face arrière d'une partie de siège de véhicule, tel qu'un dossier (1a), un appui-tête (1b) ou un support d'appui-tête (1c, 1c', 1c") d'un siège de véhicule (1), comprenant un dispositif de fixation (2a) pour monter ledit dispositif sur la partie de siège de véhicule (1a, 1b, 1c, 1c'. 1c" ) ainsi qu'un élément porteur (4, 40) qui est relié de manière mobile au dispositif de fixation (2a) et auquel est relié de manière mobile un support (5, 50, 150) de réception de la tablette tactile (6, 60), dans lequel
- ledit support (5, 50, 150) peut être déplacé entre une première position d'utilisation dans laquelle l'écran (6a, 60a, 160a) de la tablette tactile (6, 60) est orienté vers le côté montrant dans la direction opposée à la partie de siège de véhicule (1a, 1b, 1c, 1c', 1c") et à peu près verticalement, et une deuxième position d'utilisation dans laquelle l'écran (6a, 60a, 160a) de la tablette tactile (6, 60) est réglable dans une position inclinée entre une position à peu près horizontale et une position à peu près verticale,
- ledit élément porteur (4, 40) est relié par une première articulation (7, 70) au dispositif de fixation (2a),
- la première articulation (7, 70) tourne autour d'un axe (5b") qui s'étend parallèlement au petit côté arrière de la partie de siège de véhicule (1a, 1b, 1c, 1c', 1c") et horizontalement,
**caractérisé par le fait que**
ledit élément porteur (4, 40) comprend un coulisseau (4a, 45, 45a) qui est raccordé à la première articulation (7, 70) et qui forme, conjointement avec une glissière (5g, 40a) disposée sur la paroi arrière (5c, 50a) du support (5, 50, 150), un guidage linéaire par lequel le support (5, 50, 150) peut être déplacé par rapport à la première articulation (7, 70), ledit support (5, 50, 150) étant positionné pour l'essentiel au-dessus de la première articulation (7, 70) dans la première position d'utilisation et étant positionné pour l'essentiel au-dessous de la première articulation (7, 70) dans la deuxième position d'utilisation.

2. Dispositif selon la revendication 1, **caractérisé par le fait qu'**un joint rotatif (5a, 40c, 50k) est prévu entre la glissière (5g, 40a) et le support (5, 50, 150), l'axe de rotation (5b) de celui-ci s'étend perpendiculairement au petit côté de la paroi arrière (5c) du support (5, 50, 150) de sorte que le support (5, 50, 150) peut être tourné depuis le format portrait dans le format paysage.

3. Dispositif selon la revendication 2, **caractérisé par le fait que** des butées (40d, 501) ou éléments d'arrêt (40f, 50p', 50p", 50p"') sont prévus qui fixent le support (5, 50, 150) dans les positions de format portrait et de format paysage.

4. Dispositif selon la revendication 2 ou 3, **caractérisé par le fait que** le support (5, 50, 150) présente pour l'essentiel une forme rectangulaire, sur le point d'intersection des diagonales de la paroi arrière rectangulaire (5c, 50a) du support (5, 50) étant prévu ledit joint rotatif (5a, 40c, 50k).

5. Dispositif selon la revendication 2, 3 ou 4 **caractérisé par le fait que** le joint rotatif (5a, 40c, 50k) est disposé au milieu de la glissière (5g, 40a).

6. Dispositif selon l'une quelconque des revendications 1 à 5, **caractérisé par le fait que** la longueur de la glissière (5g, 40a) correspond à peu près à la longueur du côté plus long du support (5, 50, 150) rectangulaire.

7. Dispositif selon l'une quelconque des revendications précédentes, **caractérisé par le fait que** ledit élément porteur (4, 40) est relié au dispositif de fixation (2a) par l'intermédiaire d'un accouplement (3a, 3b, 30b, 30b', 130b) ayant un dispositif de verrouillage (3c, 30c, 30c', 130, 130c') apte à être débloqué manuellement, et dans lequel ledit accouplement (3a, 3b, 30b, 30b', 130b) comprend une douille de logement (3a) destinée à recevoir un élément mâle (3b, 30b, 30b', 130b).

8. Dispositif selon la revendication 7, **caractérisé par le fait que** la douille de logement (3a) est disposée sur le dispositif de fixation (2a) et que ledit élément mâle (3b, 30b, 30b', 130b) est relié avec le palier articulé (45b) via la première articulation (7, 70) au coulisseau (4a, 45, 45a).

9. Dispositif selon l'une quelconque des revendications précédentes, **caractérisé par le fait que** la première articulation (7, 70, 170) est munie d'un dispositif d'encliquetage (190a, 190a', 190a", 190b, 190b', 190d) à engagement positif qui peut être débloqué par l'intermédiaire d'un bouton-poussoir (190c) disposé sur la face frontale.

10. Dispositif selon l'une quelconque des revendications précédentes, **caractérisé par le fait que** le support (5, 50, 150) peut être fixé et utilisé aussi dans des positions situées entre les première et deuxième positions d'utilisation.

11. Dispositif selon l'une quelconque des revendications précédentes, **caractérisé par le fait que** des butées (45c, 45d) sont prévues qui limitent l'angle de pivotement de la glissière (5g, 40a) autour de la première articulation (7, 70) et ainsi l'angle d'inclinaison du support (5, 50, 150) vers l'utilisateur au moins dans les première et deuxième positions d'utilisation.

12. Dispositif selon l'une quelconque des revendications précédentes, **caractérisé par le fait qu'**entre la glissière (5g, 40a) et le coulisseau (4a, 45, 45a) est prévu un dispositif de freinage et/ou d'encliquetage (40h, 45e, 45f) par lequel le support (5, 50, 150) avec la tablette tactile (6, 60) est maintenu par friction et/ou par liaison de forme dans toute position ou dans des positions prédéterminées.

13. Dispositif selon la revendication 12, **caractérisé par le fait que** l'on prévoit une touche de déblocage disposée de préférence sur une face frontale (40a") de la glissière (5g, 40a) et destinée à débloquer le dispositif d'encliquetage (40h, 45e, 45f).

14. Dispositif selon l'une quelconque des revendications précédentes, **caractérisé par le fait que** deux appuis (5d', 5d"', 50b, 50g) disposés sur des faces frontales opposées sont réalisés en forme d'attache de sorte qu'ils s'engagent sur la tablette tactile (6, 60) insérée dans le support (5, 50), dans lequel au moins l'un des deux appuis (5d"', 50g) réalisés en forme d'attache est élastique et peut être déplacé vers l'extérieur au-delà de la paroi arrière (5c, 50a) pour insérer ou retirer la tablette tactile (6, 60).

15. Dispositif selon la revendication 14, **caractérisé par le fait qu'**une bordure (59b, 59c, 59d) s'étendant tout autour sur le support (5, 50, 59, 150) correspond à peu près à la hauteur du bord de la tablette tactile (6, 60) ou dépasse celle-ci et est pourvue vers l'extérieur d'un rayon de sécurité, et dans lequel, pour augmenter la résistance et pour monter de grands rayons de sécurité, le bord (59b, 59c, 59d) du support (5, 50, 150) est réalisé comme U à double paroi qui est fermé du côté de l'écran (6a, 60a).
